# EUROPEAN PATENT SPECIFICATION

(11) **EP 3 617 851 B1**
(45) Date of publication and mention of the grant of the patent: **19.05.2021**
(21) Application number: 18791869.3
(22) Date of filing: 20.02.2018
(51) Int. Cl.: G06F 3/01, G06F 3/0487, G06F 3/03

(54) **INFORMATION PROCESSING DEVICE, INFORMATION PROCESSING METHOD, AND RECORDING MEDIUM**
INFORMATIONSVERARBEITUNGSVORRICHTUNG, INFORMATIONSVERARBEITUNGSVERFAHREN UND AUFZEICHNUNGSMEDIUM
DISPOSITIF DE TRAITEMENT D'INFORMATIONS, PROCÉDÉ DE TRAITEMENT D'INFORMATIONS ET SUPPORT D'ENREGISTREMENT

(30) Priority: 27.04.2017 JP 2017088354
(43) Date of publication of application: 04.03.2020
(73) Proprietor: Sony Corporation, Tokyo 108-0075 (JP)
(72) Inventor: TANAKA, Tomohisa, Tokyo 108-0075 (JP)
(74) Representative: MFG Patentanwälte Meyer-Wildhagen Meggle-Freund Gerhard PartG mbB
(86) International application number: PCT/JP2018/006020
(87) International publication number: WO 2018/198499

(56) References cited:
- EP-A1- 2 079 009
- EP-A1- 2 584 531
- EP-A1- 3 153 945
- EP-A2- 2 784 632
- JP-A- 2006 121 515
- JP-A- 2010 177 775
- JP-A- 2010 177 775
- JP-A- 2013 069 040
- JP-A- 2013 069 040
- JP-A- 2014 011 504

## Description

### TECHNICAL FIELD

The present disclosure relates to an information processing apparatus, an information processing method, and a recording medium.

### BACKGROUND ART

In recent years, types of devices so-called information processing apparatuses have also diversified with the advancement of communication technologies and miniaturization of various devices. Not only personal computers (PCs) but also information processing apparatuses configured to be made carriable by users such as smartphones and tablet terminals have also been in widespread use. In particular, in recent years, so-called wearable devices configured to be made usable while being carried by a user by being worn on a part of the body have also been proposed. Specific examples of such wearable devices include devices mounted on a head such as a head mounted display (HMD) and a glasses-type wearable device (hereinafter referred to as "head-mounted devices").

Patent Document 2 provides a gesture recognition device that recognizes a gesture of shielding the front side of the imaging sensor. The gesture recognition device includes a first detection unit that detects a change in a captured image between a state in which a front side of an imaging sensor is not shielded and a state in which the front side of the imaging sensor is shielded. A second detection unit detects a region in which a gradient of a luminance value of the captured image is less than a threshold value in the captured image in the state in which the front side of the imaging sensor is shielded.

Patent Document 3 discloses a method and device for implementing a virtual button through a camera according to embodiments of the present invention which can provide a user interface for convenient and various environments to a user by including the recognition of touch of a camera lens region as well as a touch screen in an application manipulation interface.

Patent Document 4 discloses an image acquisition part acquiring an image picked up by a camera, and a shield time length feature detection part detecting features of a length of a time for which the space before the camera is blocked upon the basis of a plurality of successively acquired images. When the detected features meet predetermined conditions, an instruction readout part reads an instruction out of an instruction storage part, and an instruction signal transmission part transmits an instruction signal representing the instruction to a computer.

Patent Document 5 discloses a black image deciding part deciding whether or not each frame of a moving image photographed by a camera is a black image. A black image timing detecting part detects a generation timing in which the black image is generated. The generation timing and input character information are stored so as to be associated with each other in a dictionary database, and timing information which is identical or similar to the detected generation timing is extracted from the dictionary database by a character recognizing part.

Patent Document 6 discloses a camera attached to a cabinet of a mobile electronic device, and a portion acquiring images exposed to the outside of the cabinet. A receiver is controlled by a voice processor and outputs a voice. When a volume of the receiver is adjusted, the camera is covered by fingers of a user of a mobile electronic device. A main processor of a control device adjusts the volume of the voice outputted from the receiver based on an image of the fingers of the user covering an input light portion of the camera, the image being taken by the camera.

Patent Document 7 discloses an apparatus and methods for a touch user interface using an image sensor. A method for processing image-based input commands for a user interface includes receiving image frames from a sensor, determining when the sensor enters a cover state, determining, from subsequent image frames, when the sensor enters a de-cover state, analyzing information based upon the subsequent image frames to interpret a user command, and issuing the user command to a user interface. An apparatus having an image-based user interface includes an image sensor, and a processor connected to a memory, where the processor is configured with logic to receive image frames from the image sensor, to determine when the image sensor enters a cover state, determine, from subsequent image frames, when the image sensor enters a de-cover state, to analyze information based upon the subsequent image frames to interpret a user command, and to issue the user command to a user interface.

Patent Document 8 discloses a transmissive head-mounted display device including an image display unit that generates image light representing an image, allowing a user to visually recognize the image light, and transmitting outside scenery when worn on a head of a user. A detection unit that detects at least one of a line-of-sight direction of the user and a shielding object that is located at a predetermined distance from an eye of the user and shields a line of sight of the user. And a control unit that performs control of the image light based on the detected detection result.

### CITATION LIST

### PATENT DOCUMENT

Patent Document 1: Japanese Patent Application Laid-Open No. 2014-186361
Patent Document 2: European patent application EP 2584531 A1
Patent Document 3: European patent application EP 3153945 A1
Patent Document 4: Japanese patent application JP 2013069040 A
Patent Document 5: Japanese patent application JP 2006121515 A
Patent Document 6: Japanese patent application JP 2010177775 A
Patent Document 7: European patent application EP 2079009 A1
Patent Document 8: European patent application EP 2784632 A2

### SUMMARY OF THE INVENTION

### PROBLEMS TO BE SOLVED BY THE INVENTION

By the way, as an example of an input interface for the user to input various types of information to an information processing apparatus, input devices such as a button, a switch, and a touch sensor are generally known. Meanwhile, in the head-mounted device, there are some cases where the user has a difficulty in directly viewing an input device provided in a part of a housing due to the characteristics of the head-mounted device that is used by being worn on the head, and the cases are less convenient than a case where the user can directly view an input interface.

To cope with the inconvenience, there are some cases where gesture input is adopted as the input interface for inputting various types of information to the information processing apparatus without via the input devices such as a button and a switch. However, since gesture input requires relatively high-load processing such as image recognition, power consumption tends to be larger.

Therefore, the present disclosure proposes an information processing apparatus, an information processing method, and a recording medium capable of recognizing an operation input of a user in a more favorable form without via an input device provided in a housing of the apparatus.

### SOLUTIONS TO PROBLEMS

According to the present disclosure, provided is an information processing apparatus, an information processing method, and a recording medium as defined in the appended set of claims.

The information processing apparatus may include a determination unit configured to determine whether or not an imaging unit is in a predetermined shielding state, and a recognition unit configured to recognize an operation input of a user according to the predetermined shielding state.

Furthermore, according to the present disclosure, an information processing method may cause a computer to perform determining whether or not an imaging unit is in a predetermined shielding state, and recognizing an operation input of a user according to the predetermined shielding state.

Furthermore, according to the present disclosure, a recording medium may store a program for causing a computer to execute determining whether or not an imaging unit is in a predetermined shielding state, and recognizing an operation input of a user according to the predetermined shielding state.

### EFFECTS OF THE INVENTION

As described above, according to the present disclosure, provided is an information processing apparatus, an information processing method, and a recording medium capable of recognizing an operation input of a user in a more favorable form without via an input device provided in a housing of the apparatus.

Note that the above-described effect is not necessarily limited, and any of effects described in the present specification or other effects that can be grasped from the present specification may be exerted in addition to or in place of the above-described effect.

### BRIEF DESCRIPTION OF DRAWINGS

Fig. 1 is an explanatory view for describing an example of a schematic configuration of an information processing system according to an embodiment of the present disclosure.
Fig. 2 is an explanatory view for describing an example of a schematic configuration of an input/output device according to the embodiment.
Fig. 3 is an explanatory view for describing an outline of an input interface according to the embodiment.
Fig. 4 is an explanatory view for describing the outline of the input interface according to the embodiment.
Fig. 5 is a block diagram illustrating an example of a functional configuration of the information processing system according to the embodiment.
Fig. 6 is an explanatory diagram for describing an example of the input interface according to the embodiment.
Fig. 7 is a flowchart illustrating an example of a flow of a series of processing of the information processing system according to the present embodiment.
Fig. 8 is an explanatory diagram for describing an example of the information processing system according to the embodiment.
Fig. 9 is an explanatory diagram for describing an example of the information processing system according to the embodiment.
Fig. 10 is an explanatory diagram for describing an example of the information processing system according to the embodiment.
Fig. 11 is an explanatory diagram for describing an example of the information processing system according to the embodiment.
Fig. 12 is an explanatory diagram for describing an example of the information processing system according to the embodiment.
Fig. 13 is an explanatory diagram for describing an example of the information processing system according to the embodiment.
Fig. 14 is an explanatory diagram for describing an example of the information processing system according to the embodiment.
Fig. 15 is an explanatory diagram for describing an example of the information processing system according to the embodiment.
Fig. 16 is an explanatory diagram for describing an example of the information processing system according to the embodiment.
Fig. 17 is an explanatory diagram for describing an example of a user interface according to a first modification.
Fig. 18 is an explanatory diagram for describing an example of a user interface according to a second modification.
Fig. 19 is a functional block diagram illustrating a configuration example of a hardware configuration of an information processing apparatus configuring an information processing system according to an embodiment of the present disclosure.

### MODE FOR CARRYING OUT THE INVENTION

Favorable embodiments of the present disclosure will be described in detail with reference to the appended drawings. Note that, in the present specification and drawings, overlapping description of configuration elements having substantially the same functional configuration is omitted by providing the same sign.

Note that the description will be given in the following order.
1. Schematic Configuration
1.1 System Configuration
1.2. Configuration of Input/output Device
2. Study Regarding User Interface
3. Technical Characteristics
3.1. Outline of Input Interface
3.2. Functional Configuration
3.3. Processing
3.4. Example
3.5. Modification
4. Hardware Configuration
5. Conclusion

### <<1. Schematic Configuration>>

### <1.1. System Configuration>

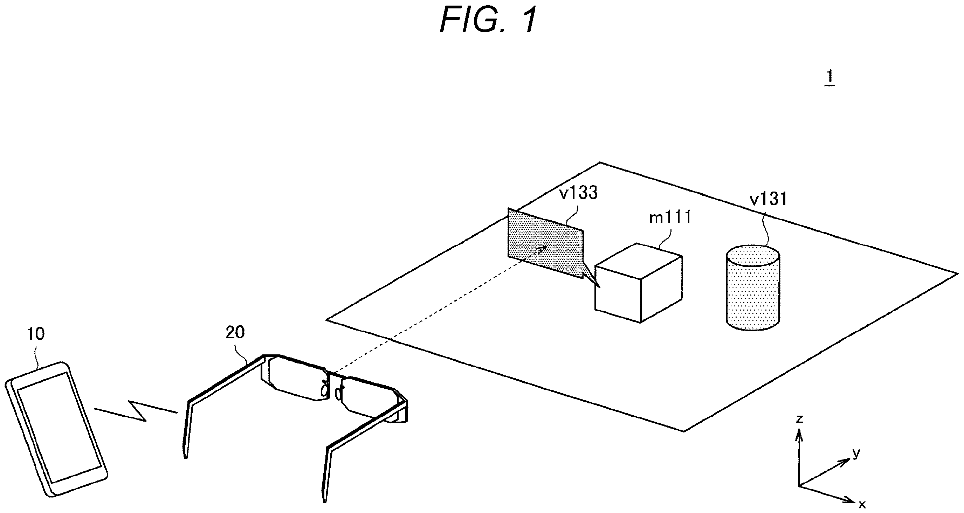

First, an example of a schematic configuration of an information processing system according to an embodiment of the present disclosure will be described with reference to Fig. 1. Fig. 1 is an explanatory view for describing an example of a schematic configuration of an information processing system according to an embodiment of the present disclosure, and illustrates an example of a case of presenting various types of content to a user applying a so-called augmented reality (AR) technology.

In Fig. 1, the reference sign m111 schematically represents an object (for example, a real object) located in a real space. Furthermore, the reference signs v131 and v133 schematically represent virtual content (for example, virtual objects) presented to be superimposed in the real space. In other words, an information processing system 1 according to the present embodiment superimposes the virtual objects on the object in the real space such as the real object m111 on the basis of the AR technology, for example, and presents the superimposed objects to the user. Note that, in Fig. 1, both the real object and the virtual objects are presented for easy understanding of the characteristics of the information processing system according to the present embodiment.

As illustrated in Fig. 1, an information processing system 1 according to the present embodiment includes an information processing apparatus 10 and an input/output device 20. The information processing apparatus 10 and the input/output device 20 are configured to be able to transmit and receive information to and from each other via a predetermined network. Note that the type of network connecting the information processing apparatus 10 and the input/output device 20 is not particularly limited. As a specific example, the network may be configured by a so-called wireless network such as a network based on a Wi-Fi (registered trademark) standard. Furthermore, as another example, the network may be configured by the Internet, a dedicated line, a local area network (LAN), a wide area network (WAN), or the like. Furthermore, the network may include a plurality of networks, and at least a part of the networks may be configured as a wired network.

The input/output device 20 is configured to obtain various types of input information and present various types of output information to the user who holds the input/output device 20. Furthermore, the presentation of the output information by the input/output device 20 is controlled by the information processing apparatus 10 on the basis of the input information acquired by the input/output device 20. For example, the input/output device 20 acquires, as the input information, information for recognizing the real object m111 (for example, a captured image of the real space), and outputs the acquired information to the information processing apparatus 10. The information processing apparatus 10 recognizes the position of the real object m111 in the real space on the basis of the information acquired from the input/output device 20, and causes the input/output device 20 to present the virtual objects v131 and v133 on the basis of the recognition result. With such control, the input/output device 20 can present, to the user, the virtual objects v131 and v133 such that the virtual objects v131 and v133 are superimposed on the real object m111 on the basis of the so-called AR technology.

Furthermore, the input/output device 20 is configured as, for example, a so-called head-mounted device that the user wears on at least a part of the head and uses, and may be configured to be able to detect a line of sight of the user. In a case where the information processing apparatus 10 recognizes that the user is gazing at a desired target (for example, the real object m111 or the virtual objects v131 and v133, or the like) on the basis of the detection result of the line of sight of the user by the input/output device 20, the information processing apparatus 10 may specify the target as an operation target, on the basis of such a configuration. Furthermore, the information processing apparatus 10 may specify the target to which the line of sight of the user is directed as the operation target in response to a predetermined operation to the input/output device 20 as a trigger. As described above, the information processing apparatus 10 may provide various services to the user via the input/output device 20 by specifying the operation target and executing processing associated with the operation target.

Furthermore, the information processing apparatus 10 may recognize a motion of at least a part of the body of the user (for example, change in position or orientation, a gesture, or the like) as an operation input of the user on the basis of the input information acquired by the input/output device 20, and execute various types of processing according to the recognition result of the operation input. As a specific example, the input/output device 20 acquires, as the input information, information for recognizing a hand of the user (for example, a captured image of the hand), and outputs the acquired information to the information processing apparatus 10. The information processing apparatus 10 recognizes the motion of the hand (for example, a gesture) on the basis of the information acquired from the input/output device 20, and recognizes an instruction from the user (in other words, the operation input of the user) according to the recognition result of the motion. Then, the information processing apparatus 10 may control display of a virtual object to be presented to the user (for example, the display position and posture of the virtual object) according to the recognition result of the operation input of the user, for example. Note that, in the present disclosure, the "operation input of the user" may be regarded as an input corresponding to the instruction from the user, that is, an input reflecting the user's intention, as described above. Hereinafter, the "operation input of the user" may be simply referred to as "user input".

Note that, in Fig. 1, the input/output device 20 and the information processing apparatus 10 are illustrated as devices different from each other. However, the input/output device 20 and the information processing apparatus 10 may be integrally configured. Furthermore, details of the configurations and processing of the input/output device 20 and the information processing apparatus 10 will be separately described below.

An example of a schematic configuration of the information processing system according to the embodiment of the present disclosure has been described with reference to Fig. 1.

### <1.2. Configuration of Input/output Device>

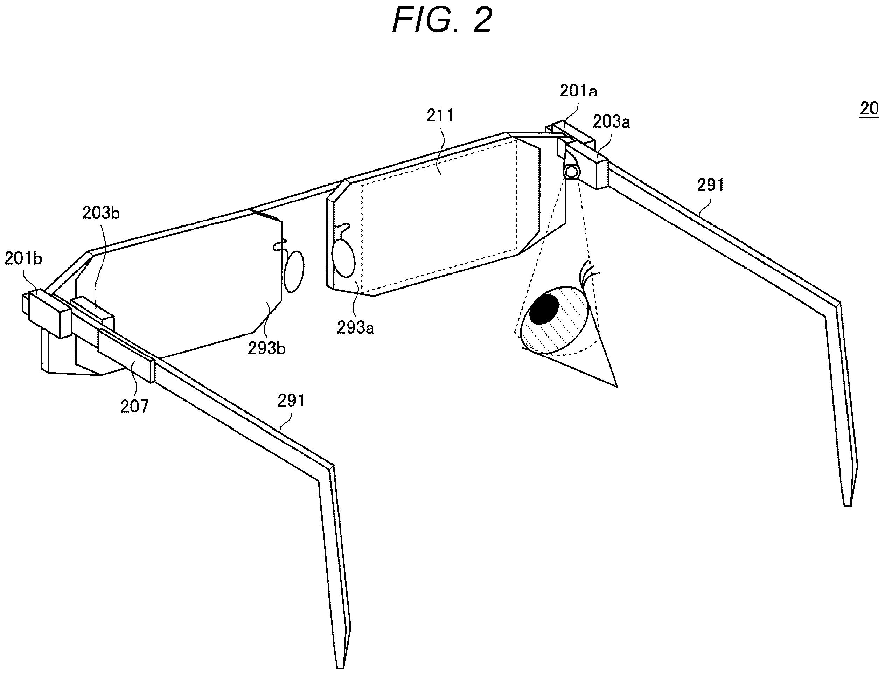

Next, an example of a schematic configuration of the input/output device 20 according to the present embodiment illustrated in Fig. 1 will be described with reference to Fig. 2. Fig. 2 is an explanatory diagram for describing an example of a schematic configuration of the input/output device according to the present embodiment.

As described above, the input/output device 20 according to the present embodiment is configured as a so-called head-mounted device that the user wears on at least a part of the head and uses. For example, in the example illustrated in Fig. 2, the input/output device 20 is configured as a so-called eyewear type (glasses type) device, and at least one of a lens 293a or 293b is configured as a transmission type display (display unit 211). Furthermore, the input/output device 20 includes imaging units 201a and 201b, an operation unit 207, and a holding unit 291 corresponding to a frame of glasses. Furthermore, the input/output device 20 may include imaging units 203a and 203b. Note that, hereinafter, various descriptions will be given on the assumption that the input/output device 20 includes the imaging units 203a and 203b. The holding unit 291 holds the display unit 211, the imaging units 201a and 201b, the imaging units 203a and 203b, and the operation unit 207 to have a predetermined positional relationship with respect to the head of the user when the input/output device 20 is mounted on the head of the user. Furthermore, although not illustrated in Fig. 2, the input/output device 20 may be provided with a sound collection unit for collecting a voice of the user.

Here, a more specific configuration of the input/output device 20 will be described. For example, in the example illustrated in Fig. 2, the lens 293a corresponds to a lens on a right eye side, and the lens 293b corresponds to a lens on a left eye side. In other words, the holding unit 291 holds the display unit 211 such that the display unit 211 (in other words, the lenses 293a and 293b) is located in front of the eyes of the user in a case where the input/output device 20 is mounted.

The imaging units 201a and 201b are configured as so-called stereo cameras and are held by the holding unit 291 to face a direction in which the head of the user faces (in other words, the front of the user) when the input/output device 20 is mounted on the head of the user. At this time, the imaging unit 201a is held near the user's right eye, and the imaging unit 201b is held near the user's left eye. The imaging units 201a and 201b capture an object located in front of the input/output device 20 (in other words, a real object located in the real space) from different positions on the basis of such a configuration. Thereby, the input/output device 20 acquires images of the object located in front of the user and can calculate a distance to the object from the input/output device 20 (the position of a viewpoint of the user, accordingly) on the basis of a parallax between the images respectively captured by the imaging units 201a and 201b.

Note that the configuration and method are not particularly limited as long as the distance between the input/output device 20 and the object can be measured. As a specific example, the distance between the input/output device 20 and the object may be measured on the basis of a method such as multi-camera stereo, moving parallax, time of flight (TOF), or structured light. Here, the TOF is a method of obtaining an image (so-called distance image) including a distance (depth) to an object on the basis of a measurement result by projecting light such as infrared light on the object and measuring a time required for the projected light to be reflected by the object and return, for each pixel. Furthermore, the structured light is a method of obtaining a distance image including a distance (depth) to an object on the basis of change in pattern obtained from a capture result by irradiating the object with the pattern with light such as infrared light and capturing the pattern. Furthermore, the moving parallax is a method of measuring a distance to an object on the basis of a parallax even in a so-called monocular camera. Specifically, the object is captured from different viewpoints from each other by moving the camera, and the distance to the object is measured on the basis of the parallax between the captured images. Note that, at this time, the distance to be object can be measured with more accuracy by recognizing a moving distance and a moving direction of the camera by various sensors. Note that the configuration of the imaging unit (for example, the monocular camera, the stereo camera, or the like) may be changed according to the distance measuring method.

Furthermore, the imaging units 203a and 203b are held by the holding unit 291 such that eyeballs of the user are located within respective imaging ranges when the input/output device 20 is mounted on the head of the user. As a specific example, the imaging unit 203a is held such that the user's right eye is located within the imaging range. The direction in which the line of sight of the right eye is directed can be recognized on the basis of an image of the eyeball of the right eye captured by the imaging unit 203a and a positional relationship between the imaging unit 203a and the right eye, on the basis of such a configuration. Similarly, the imaging unit 203b is held such that the user's left eye is located within the imaging range. In other words, the direction in which the line of sight of the left eye is directed can be recognized on the basis of an image of the eyeball of the left eye captured by the imaging unit 203b and a positional relationship between the imaging unit 203b and the left eye. Note that the example in Fig. 2 illustrates the configuration in which the input/output device 20 includes both the imaging units 203a and 203b. However, only one of the imaging units 203a and 203b may be provided.

The operation unit 207 is configured to receive an operation on the input/output device 20 from the user. The operation unit 207 may be configured by, for example, an input device such as a touch panel or a button. The operation unit 207 is held at a predetermined position of the input/output device 20 by the holding unit 291. For example, in the example illustrated in Fig. 2, the operation unit 207 is held at a position corresponding to a temple of the glasses.

Furthermore, the input/output device 20 according to the present embodiment may be provided with, for example, an acceleration sensor and an angular velocity sensor (gyro sensor) and configured to be able to detect a motion of the head (in other words, a posture of the input/output device 20 itself) of the user wearing the input/output device 20. As a specific example, the input/output device 20 may detect components in a yaw direction, a pitch direction, and a roll direction as the motion of the head of the user, thereby recognizing change in at least one of the position or posture of the head of the user.

The input/output device 20 according to the present embodiment can recognize changes in its own position and posture in the real space according to the motion of the head of the user on the basis of the above configuration. Furthermore, at this time, the input/output device 20 can present the virtual content (in other words, the virtual object) on the display unit 211 to superimpose the virtual content on the real object located in the real space on the basis of the so-called AR technology. Furthermore, at this time, the input/output device 20 may estimate the position and posture (in other words, self-position) of the input/output device 20 itself in the real space and use an estimation result for the presentation of the virtual object on the basis of a technology called simultaneous localization and mapping (SLAM) or the like, for example.

Here, as a reference, an outline of the SLAM will be described. The SLAM is a technology for performing self-position estimation and creation of an environmental map in parallel by using an imaging unit such as a camera, various sensors, an encoder, and the like. As a more specific example, in the SLAM (in particular, Visual SLAM), a three-dimensional shape of a captured scene (or object) is sequentially restored on the basis of a moving image captured by the imaging unit. Then, by associating the restoration result of the captured scene with the detection result of the position and posture of the imaging unit, the creation of a map of a surrounding environment, and the estimation of the position and posture of the imaging unit (the input/output device 20, accordingly) in the environment are performed. Note that the position and posture of the imaging unit can be estimated as information indicating relative change on the basis of the detection result of the sensor by providing various sensors such as an acceleration sensor and an angular velocity sensor to the input/output device 20, for example. Of course, the estimation method is not necessarily limited to the method based on detection results of the various sensors such as an acceleration sensor and an angular velocity sensor as long as the position and posture of the imaging unit can be estimated.

Furthermore, examples of a head mounted display (HMD) device applicable to the input/output device 20 include a see-through HMD, a video see-through HMD, and a retinal projection HMD.

The see-through HMD uses, for example, a half mirror or a transparent light guide plate to hold a virtual image optical system including a transparent light guide or the like in front of the eyes of the user, and displays an image inside the virtual image optical system. Therefore, the user wearing the see-through HMD can take the external scenery into view while viewing the image displayed inside the virtual image optical system. With such a configuration, the see-through HMD can superimpose an image of the virtual object on an optical image of the real object located in the real space according to the recognition result of at least one of the position or posture of the see-through HMD on the basis of the AR technology, for example. Note that a specific example of the see-through HMD includes a so-called glasses-type wearable device in which a portion corresponding to a lens of glasses is configured as a virtual image optical system. For example, the input/output device 20 illustrated in Fig. 2 corresponds to an example of the see-through HMD.

In a case where the video see-through HMD is mounted on the head or face of the user, the video see-through HMD is mounted to cover the eyes of the user, and a display unit such as a display is held in front of the eyes of the user. Furthermore, the video see-through HMD includes an imaging unit for capturing surrounding scenery, and causes the display unit to display an image of the scenery in front of the user captured by the imaging unit. With such a configuration, the user wearing the video see-through HMD has a difficulty in directly taking the external scenery into view but the user can confirm the external scenery with the image displayed on the display unit. Furthermore, at this time, the video see-through HMD may superimpose the virtual object on an image of the external scenery according to the recognition result of at least one of the position or posture of the video see-through HMD on the basis of the AR technology, for example.

The retinal projection HMD has a projection unit held in front of the eyes of the user, and an image is projected from the projection unit toward the eyes of the user such that the image is superimposed on the external scenery. More specifically, in the retinal projection HMD, an image is directly projected from the projection unit onto the retinas of the eyes of the user, and the image is imaged on the retinas. With such a configuration, the user can view a clearer image even in a case where the user has myopia or hyperopia. Furthermore, the user wearing the retinal projection HMD can take the external scenery into view even while viewing the image projected from the projection unit. With such a configuration, the retinal projection HMD can superimpose an image of the virtual object on an optical image of the real object located in the real space according to the recognition result of at least one of the position or posture of the retinal projection HMD on the basis of the AR technology, for example.

Furthermore, in the above description, an example of the configuration of the input/output device 20 according to the present embodiment has been described on the assumption that the AR technology is applied. However, the above description does not necessarily limit the configuration of the input/output device 20. For example, in a case of assuming application of a VR technology, the input/output device 20 according to the present embodiment may be configured as an HMD called immersive HMD. The immersive HMD is mounted to cover the eyes of the user, and a display unit such as a display is held in front of the eyes of the user, similarly to the video see-through HMD. Therefore, the user wearing the immersive HMD has a difficulty in directly taking an external scenery (in other words, scenery of a real world) into view, and only an image displayed on the display unit comes into view. With such a configuration, the immersive HMD can provide an immersive feeling to the user who is viewing the image.

An example of the schematic configuration of the input/output device according to the embodiment of the present disclosure has been described with reference to Fig. 2.

### <<2. Study Regarding User Interface»

Next, issues of the information processing apparatus according to the present embodiment will be addressed after a user interface assuming a situation where the head-mounted device is used is discussed.

Examples of the input interface for the user to input various types of information to the information processing apparatus include input devices such as a button, a switch, and a touch sensor. In the head-mounted device such as the input/output device 20 described with reference to Fig. 2, there are some cases where the input devices such as a button and a touch sensor (for example, the operation unit 207 illustrated in Fig. 2 or the like) are provided in a part (for example, a part of the holding unit that holds the display unit, the imaging unit, and the like) of a housing, for example.

Meanwhile, in the head-mounted device, there are some cases where the user has a difficulty in directly viewing the input device provided in a part of the housing due to the characteristics of the head-mounted device that is used by being worn on the head, and the cases are less convenient than a case where the user can directly view an input interface.

Furthermore, under circumstances where the input interface provided in the housing that holds the display unit and the imaging unit is operated, the housing is vibrated due to the operation of the input interface, and there are some cases where the vibration is transmitted to the display unit and the imaging unit held by the housing. Under such circumstances, for example, the relative positional relationship between the user's eyes and the display unit and the imaging unit changes, and there are some cases where the real object and the virtual object presented to be superimposed on the real object are not visually recognized by the user in a correct positional relationship.

To cope with the cases, there are some cases where gesture input is adopted as the input interface for inputting various types of information to the information processing apparatus without via the input devices such as a button and a switch. In the gesture input, for example, by analyzing an image captured by the imaging unit or the like, a gesture using a part such as a hand is recognized, and a user input is recognized according to the recognition result of the gesture. Thereby, the user can input information to the information processing apparatus by a more intuitive operation like the gesture without operating the input device (in other words, the input device difficult to visually recognize) provided in the housing.

However, since the gesture input requires relatively high-load processing such as image recognition, power consumption tends to be larger. Meanwhile, many of head-mounted devices as described with reference to Fig. 2 are driven by batteries due to the characteristics of being used by being worn on the head and are carried and used like smart phones. In such devices, a configuration to further reduce the power consumption is more desirable.

In view of the above situation, the present disclosure proposes an example of a technology capable of recognizing a user input without via an input device provided in a housing of an apparatus and further reducing a processing load related to the recognition.

### <<3. Technical Characteristics>>

Hereinafter, technical characteristics of the information processing apparatus according to an embodiment of the present disclosure will be described.

### <3.1. Outline of Input Interface>

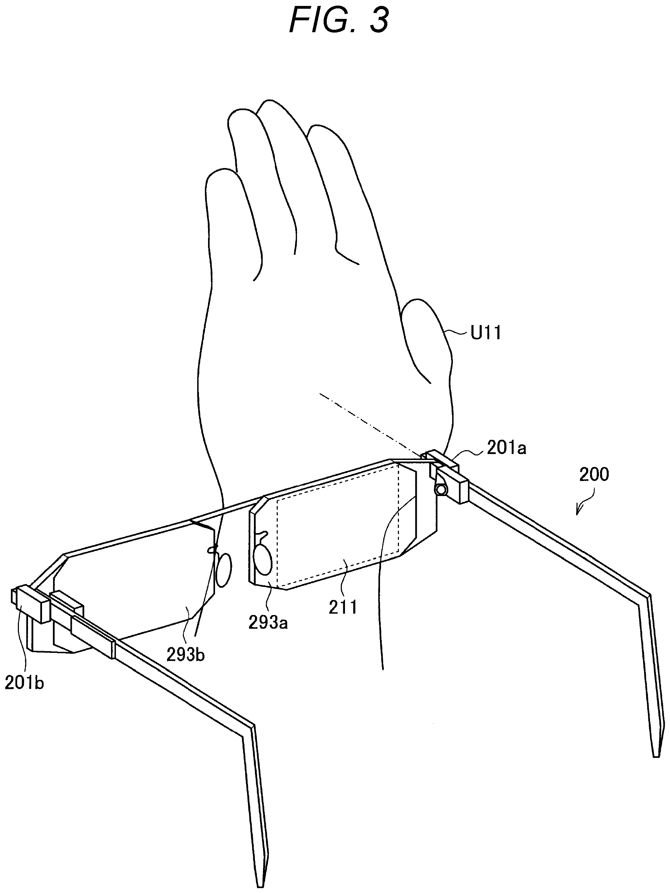

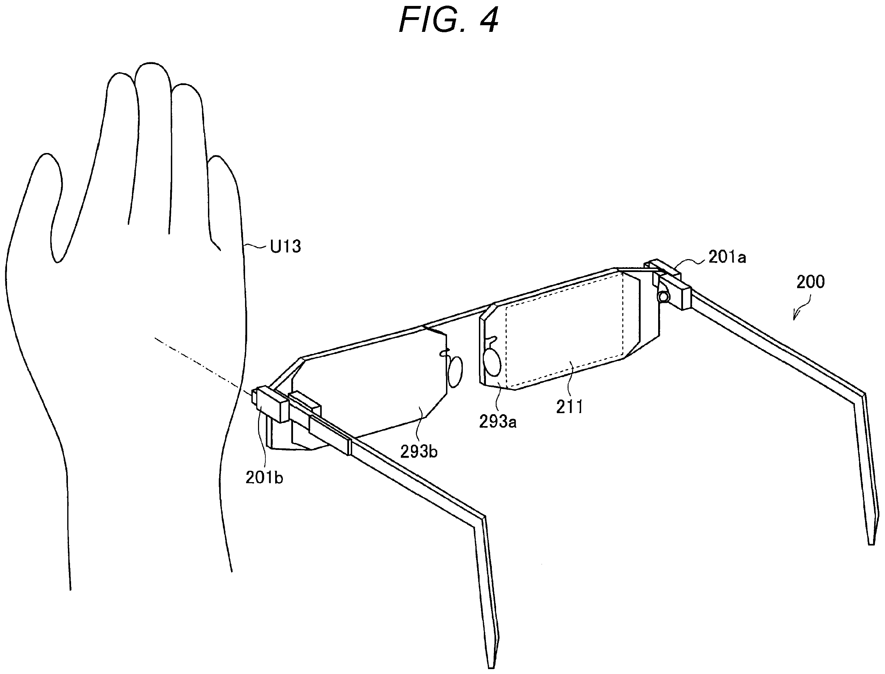

First, an outline of an example of the input interface for the information processing apparatus according to an embodiment of the present disclosure to recognize the user input will be described with reference to Figs. 3 and 4. Figs. 3 and 4 are explanatory views for describing the outline of the input interface according to the present embodiment.

The information processing apparatus 10 according to the present embodiment uses an imaging unit that captures an image of an external environment (for example, an imaging unit used for the recognition of the real object, the self-position estimation, and the like), like a stereo camera provided in the head-mounted device, as the recognition of the user input, for example. Therefore, in the present description, the outline of the input interface according to the present embodiment will be described by taking a case where the imaging units 201a and 201b are used to recognize the user input in the input/output device 20 described with reference to Fig. 2, as an example.

In the information processing system according to the present embodiment, the user can issue various instructions to the information processing apparatus 10 by covering at least a part of the imaging units 201a and 201b with a part such as a hand. In other words, the information processing apparatus 10 recognizes the user input according to whether or not at least a part of the imaging units of the imaging units 201a and 201b is in a predetermined shielding state. Note that the predetermined shielding state includes, for example, a state in which substantially an entire angle of view of a desired imaging unit is shielded. Note that, in the following description, description will be given on the assumption that the predetermined shielding state indicates the state in which substantially the entire angle of view of a desired imaging unit is shielded. However, the present embodiment is not necessarily limited to this state.

For example, Fig. 3 illustrates a situation in which the angle of view of the imaging unit 201a is shielded by a hand U11 of the user. In this case, the information processing apparatus 10 determines whether or not substantially an entire angle of view of the imaging unit 201a is shielded on the basis of a predetermined method, and recognizes that a predetermined input has been performed by the user (in other words, recognizes the user input) in a case of determining that substantially the entire angle of view is shielded. Note that the imaging unit 201a corresponds to an example of a "first imaging unit". In other words, the above determination regarding the shielding state of the imaging unit 201a (for example, determination as to whether or not substantially the entire angle of view of the imaging unit 201a is shielded) corresponds to an example of "first determination".

Further, Fig. 4 illustrates a situation in which the angle of view of the imaging unit 201b is shielded by a hand U13 of the user. In this case, the information processing apparatus 10 determines whether or not substantially an entire angle of view of the imaging unit 201b is shielded, and recognizes the user input according to the determination result, similarly to the example described with reference to Fig. 3. Note that the imaging unit 201b corresponds to an example of a "second imaging unit". In other words, the above determination regarding the shielding state of the imaging unit 201b corresponds to an example of "second determination".

Note that the determination method is not particularly limited as long as whether or not substantially the entire angles of view of the imaging units 201a and 201b are shielded can be determined. As a specific example, the information processing apparatus 10 may determine whether or not substantially the entire angles of view of the imaging units 201a and 201b are shielded on the basis of brightness of images respectively captured by the imaging units 201a and 201b. Note that a method of determining whether or not substantially an entire angle of view of a predetermined imaging unit according to brightness of an image captured by the imaging unit will be described below in detail as an example. Furthermore, as another example, whether or not substantially the entire angles of view of the imaging units 201a and 201b are shielded may be determined using various sensors such as a proximity sensor and a distance measuring sensor. In this case, in a case where each of the imaging units 201a and 201b and a shielding object are located close enough to shield substantially the entire view of angle of the imaging unit (in other words, the detection result of the distance between the imaging unit and the shielding object is equal to or smaller than a threshold value), it may be determined that substantially the entire view of angle is shielded.

With the above configuration, the information processing apparatus 10 can recognize the user input according to which substantially entire angle of view of the imaging units 201a and 201b is shielded, for example.

Furthermore, as another example, the information processing apparatus 10 may recognize the user input according to a combination of the imaging units of which substantially the entire views of angle are shielded, of the imaging units 201a and 201b. In other words, in a case where substantially the entire views of angle of both the imaging units 201a and 201b are shielded, the information processing apparatus 10 can recognize that a different input has been performed, from the case where substantially the entire view of angle of only one of the imaging units 201a and 201b is shielded.

An outline of an example of the input interface for the information processing apparatus according to the embodiment of the present disclosure to recognize the user input has been described with reference to Figs. 3 and 4.

### <3.2. Functional Configuration>

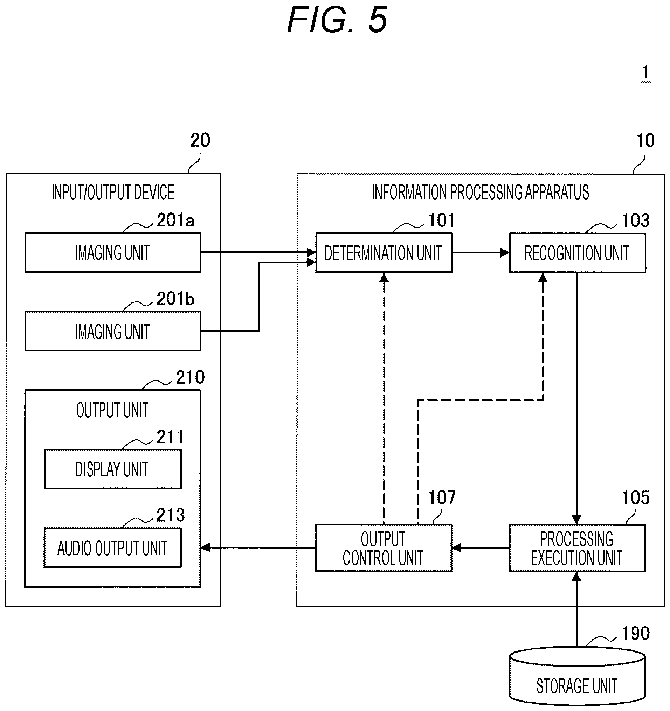

Next, an example of a functional configuration of the information processing system 1 according to the present embodiment will be described with reference to Fig. 5. Fig. 5 is a block diagram illustrating an example of a functional configuration of the information processing system 1 according to the present embodiment. Therefore, hereinafter, the respective configurations of the information processing apparatus 10 and the input/output device 20 will be described in more detail on the assumption that the information processing system 1 includes the information processing apparatus 10 and the input/output device 20, as described with reference to Fig. 1. Note that, as illustrated in Fig. 5, the information processing system 1 may include a storage unit 190.

First, the configuration of the input/output device 20 will be described. As illustrated in Fig. 5, the input/output device 20 includes imaging units 201a and 201b and an output unit 210. The output unit 210 includes a display unit 211. Furthermore, the output unit 210 may include an audio output unit 213. The imaging units 201a and 201b correspond to the imaging units 201a and 201b described with reference to Fig. 2. Note that, in a case where the imaging units 201a and 201b are not particularly distinguished, the imaging units 201a and 201b may be simply referred to as "imaging unit 201". Furthermore, the display unit 211 corresponds to the display unit 211 described with reference to Fig. 2. Furthermore, the audio output unit 213 includes an audio device such as a speaker and outputs sound and audio according to information to be output.

Next, the configuration of the information processing apparatus 10 will be described. As illustrated in Fig. 5, the information processing apparatus 10 includes a determination unit 101, a recognition unit 103, a processing execution unit 105, and an output control unit 107.

The determination unit 101 acquires information according to a capture result of an image from the imaging unit 201 and determines whether or not substantially the entire angle of view of the imaging unit 201 is shielded by some sort of the real object (for example, a hand of the user or the like) according to the acquired information.

For example, the determination unit 101 may acquire the image captured by the imaging unit 201 from the imaging unit 201, and determine whether or not substantially the entire angle of view of the imaging unit 201 is shielded according to the brightness (for example, distribution of luminance for each pixel) of the acquired image. As a more specific example, the determination unit 101 may calculate an average value of the luminance of pixels of the acquired image, and determine that substantially the entire view of angle of the imaging unit 201 that has captured the image is shielded in a case where the calculated average value is equal to or smaller than a threshold value.

Furthermore, as another example, the determination unit 101 may acquire the captured image from the imaging unit 201, and determine that substantially the entire angle of view of the imaging unit 201 is shielded in a case of determining that recognition of the object (in other words, the real object) in the real space is difficult on the basis of the acquired image. As a more specific example, the determination unit 101 may determine that substantially the entire angle of view of the imaging unit 201 that has captured the image is shielded in a case where extraction of characteristic points for recognizing the real object from the acquired image is difficult (for example, the number of extracted characteristic points is equal to or smaller than a threshold value).

Of course, the above-described examples are mere examples, and the determination method is not particularly limited as long as the determination unit 101 can determine whether or not substantially the entire angle of view of the imaging unit 201 is shielded. As a specific example, in a case where the determination unit 101 detects proximity of the real object to the imaging unit 201 with a distance measuring sensor, a proximity sensor, or the like, the determination unit 101 may determine that substantially the entire angle of view of the imaging unit 201 is shielded.

Note that the number of imaging units 201 to be determined by the determination unit 101 is not particularly limited. As a specific example, the determination unit 101 may determine only one of the imaging units 201a and 201b or may determine both of the imaging units 201a and 201b. Furthermore, the determination unit 101 may determine another imaging unit other than the imaging units 201a and 201b. In other words, the determination unit 101 may determine three or more imaging units.

Furthermore, timing when the determination unit 101 performs the above-described determination is not particularly limited. As a specific example, the determination unit 101 may perform the above-described determination periodically at each predetermined timing. Furthermore, as another example, the determination unit 101 may perform the above-described determination in response to a predetermined trigger. As a specific example, the determination unit 101 may perform the above-described determination in a case where predetermined display information such as an operation menu for prompting the user input is displayed on the display unit 211. In this case, the determination unit 101 may recognize whether or not the predetermined display information is displayed on the display unit 211 on the basis of, for example, a notification from the output control unit 107 described below.

Then, the determination unit 101 notifies the recognition unit 103 of information indicating the determination result as to whether or not substantially the entire angle of view of the imaging unit 201 is shielded. At this time, for example, the determination unit 101 may notify the recognition unit 103 of the information indicating the determination result in a case of determining that substantially the entire angle of view of a predetermined imaging unit 201 is shielded. Furthermore, the determination unit 101 may notify the recognition unit 103 of the information indicating the determination result for each imaging unit 201 in a case where a plurality of candidates of the imaging unit 201 to be determined exists.

The recognition unit 103 acquires the information indicating the determination result as to whether or not substantially the entire angle of view of the imaging unit 201 is shielded from the determination unit 101, and recognizes the user input on the basis of the acquired information. At this time, the recognition unit 103 may recognize the user input according to information related to the recognition of the user input displayed on the display unit 211 and the information indicating the determination result.

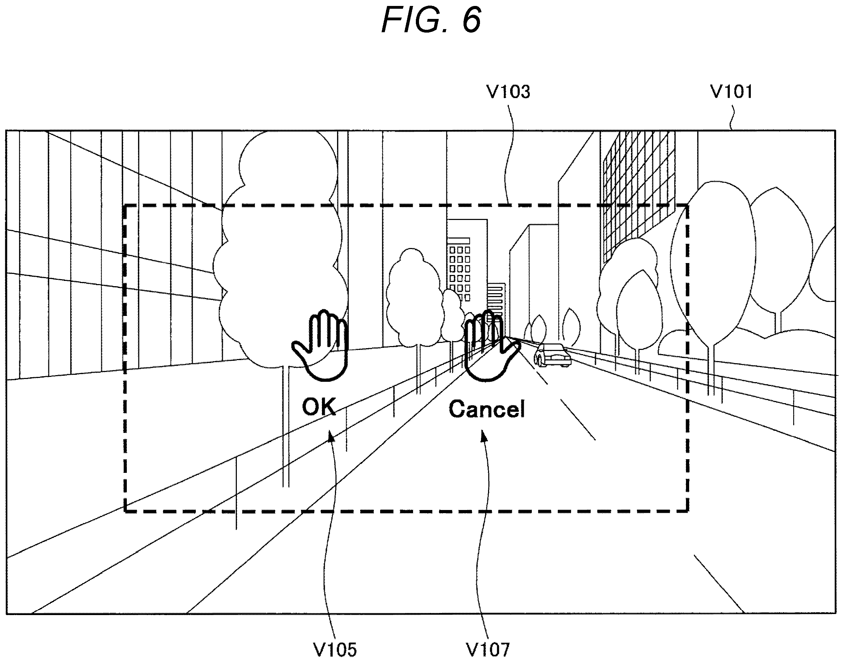

For example, Fig. 6 is an explanatory diagram for describing an example of an input interface according to the present embodiment, and illustrates an example of an operation menu presented via the display unit 211 of the input/output device 20. In Fig. 6, the reference sign V101 schematically represents an optical image in the real space visually recognized by the user. Furthermore, the reference sign V103 represents a region (in other words, a drawing region) where display information (for example, the virtual object) is presented via the display unit 211. Furthermore, the reference signs V105 and V107 represent examples of the display information presented as operation menus. Specifically, the display information V105 is associated with an operation menu meaning permission of execution of predetermined processing, and the display information V107 is associated with an operation menu meaning cancellation of the execution of the processing.

Under the circumstances illustrated in Fig. 6, the recognition unit 103 recognizes that the operation menu corresponding to the display information V105 has been selected in a case where substantially the entire angle of view of the imaging unit 201b (in other words, the imaging unit 201b illustrated in Fig. 2) located on a relatively left side with respect to the user wearing the input/output device 20 is shielded, for example. In this case, the recognition unit 103 recognizes that the user has issued an instruction to affirm execution of the predetermined processing. In other words, the recognition unit 103 recognizes the above-described operation by the user as a user input meaning affirmative.

Furthermore, the recognition unit 103 recognizes that the operation menu corresponding to the display information V107 has been selected in a case where substantially the entire angle of view of the imaging unit 201a (in other words, the imaging unit 201a illustrated in Fig. 2) located on a relatively right side with respect to the user wearing the input/output device 20 is shielded. In this case, the recognition unit 103 recognizes that the user has issued an instruction to cancel the execution of the predetermined processing. In other words, the recognition unit 103 recognizes the above operation by the user as a user input meaning cancellation.

Note that the recognition unit 103 may execute the above-described processing regarding recognition of the user input in response to a predetermined trigger. As a specific example, the recognition unit 103 may execute the processing regarding recognition of the user input in a case where the predetermined display information such as an operation menu for prompting the user input is displayed on the display unit 211. In this case, the recognition unit 103 may recognize whether or not the predetermined display information is displayed on the display unit 211 on the basis of, for example, a notification from the output control unit 107.

Then, the recognition unit 103 outputs information indicating the recognition result of the user input to the processing execution unit 105.

The processing execution unit 105 is a configuration for executing various functions (for example, applications) provided by the information processing apparatus 10 (in other words, the information processing system 1). For example, the processing execution unit 105 may extract a corresponding application from a predetermined storage unit (for example, the storage unit 190 described below) according to the recognition result of the user input by the recognition unit 103 and execute the extracted application. Furthermore, the processing execution unit 105 may control the operation of the application being executed according to the recognition result of the user input by the recognition unit 103. For example, the processing execution unit 105 may switch a subsequent operation of the application being executed according to the operation menu selected by the user. Furthermore, the processing execution unit 105 may output information indicating execution results of the various applications to the output control unit 107.

The output control unit 107 causes the output unit 210 to output various types of information to be output, thereby presenting the information to the user. For example, the output control unit 107 may present the display information to be output to the user by causing the display unit 211 to display the display information. Furthermore, the output control unit 107 may present the information to be output to the user by causing the audio output unit 213 to output an audio corresponding to the information.

For example, the output control unit 107 may acquire the information indicating execution results of the various applications from the processing execution unit 105, and present output information corresponding to the acquired information to the user via the output unit 210. As a specific example, the output control unit 107 may cause the display unit 211 to display display information corresponding to an operation menu of a desired application, such as the display information V105 and V107 illustrated in Fig. 6, according to the execution result of the desired application. Furthermore, the output control unit 107 may cause the display unit 211 to display display information indicating the execution result of the desired application. Furthermore, the output control unit 107 may cause the audio output unit 213 to output output information according to the execution result of the desired application as sound or audio.

Furthermore, the output control unit 107 may notify the determination unit 101 and the recognition unit 103 of information indicating an output situation of various types of output information via the output unit 210. As a specific example, in a case where the output control unit 107 causes the display unit 211 to display the information regarding the operation of the user such as the display information V105 and V107 illustrated in Fig. 6, the output control unit 107 may notify the determination unit 101 and the recognition unit 103 that the information is being displayed.

The storage unit 190 is a storage region for temporarily or constantly storing various data. For example, the storage unit 190 may store data for the information processing apparatus 10 to execute various functions. As a more specific example, the storage unit 190 may store data (for example, a library) for executing various applications, management data for managing various settings, and the like.

Note that the functional configurations of the information processing system 1 illustrated in Fig. 5 are mere examples, and the functional configurations of the information processing system 1 are not necessarily limited to the example illustrated in Fig. 5 only as long as the processing of the above-described configurations can be implemented. As a specific example, the input/output device 20 and the information processing apparatus 10 may be integrally configured. Furthermore, as another example, the storage unit 190 may be included in the information processing apparatus 10 or may be configured as a recording medium outside the information processing apparatus 10 (for example, a recording medium externally attached to the information processing apparatus 10). Furthermore, as another example, a part of the configurations of the information processing apparatus 10 may be provided outside the information processing apparatus 10 (for example, a server or the like).

An example of the functional configurations of the information processing system 1 according to the present embodiment has been described with reference to Fig. 5.

### <3.3. Processing>

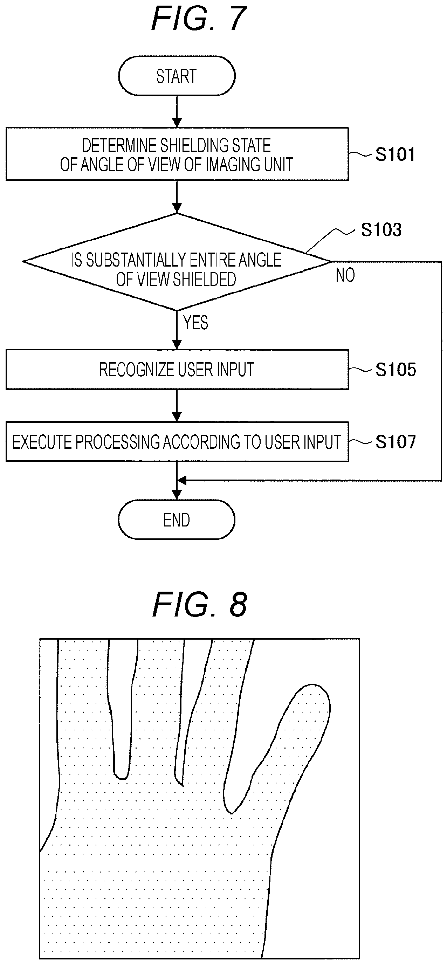

Next, an example of a flow of series of processing of the information processing system 1 according to the present embodiment will be described especially focusing on the operation of the information processing apparatus 10 with reference to Fig. 7. Fig. 7 is a flowchart illustrating an example of a flow of a series of processing of the information processing system 1 according to the present embodiment.

First, the information processing apparatus 10 (the determination unit 101) acquires the information according to a capture result of an image from a predetermined imaging unit 201 held by the input/output device 20, and determines whether or not substantially the entire angle of view of the imaging unit 201 is shielded by some sort of real object (for example, a hand of the user or the like) according to the acquired information (S101).

In a case where the determination unit 101 determines that substantially the entire angle of view of the predetermined imaging unit 201 is shielded (S103, YES), the information processing apparatus 10 (recognition unit 103) recognizes the user input according to the imaging unit with the angle of view determined to be shielded (S105). Then, the information processing apparatus 10 executes processing according to the recognition result of the user input (S107). As a specific example, the information processing apparatus 10 (the processing execution unit 105) may execute a corresponding application according to the recognition result of the user input. Furthermore, the information processing apparatus 10 (output control unit 107) may present the output information according to the execution result of the application to the user via the output unit 210.

Furthermore, in a case where the determination unit 101 determines that substantially the entire angle of view of the predetermined imaging unit 201 is not shielded (S103, NO), the information processing apparatus 10 may transition to subsequent processing without executing the processing according to the reference signs S103 and S107.

Note that the timing when the information processing apparatus 10 executes the series of processing represented by the reference signs S101 to S107 is not particularly limited. For example, the information processing apparatus 10 may execute the series of processes in response to a predetermined trigger. As a more specific example, in a case where the information processing apparatus 10 prompts the user to input information via the input/output device 20, the information processing apparatus 10 may execute the above-described series of processing.

As described above, an example of a flow of the series of processing of the information processing system 1 according to the present embodiment has been described especially focusing on the operation of the information processing apparatus 10 with reference to Fig. 7.

### <3.4. Examples>

Next, an example of the method of determining whether or not substantially the entire angle of view of a predetermined imaging unit is shielded on the basis of the brightness of an image captured by the imaging unit will be described citing specific examples with reference to Figs. 8 to 16, as examples. Figs. 8 to 16 are explanatory diagrams for describing an example of the information processing system according to the present embodiment.

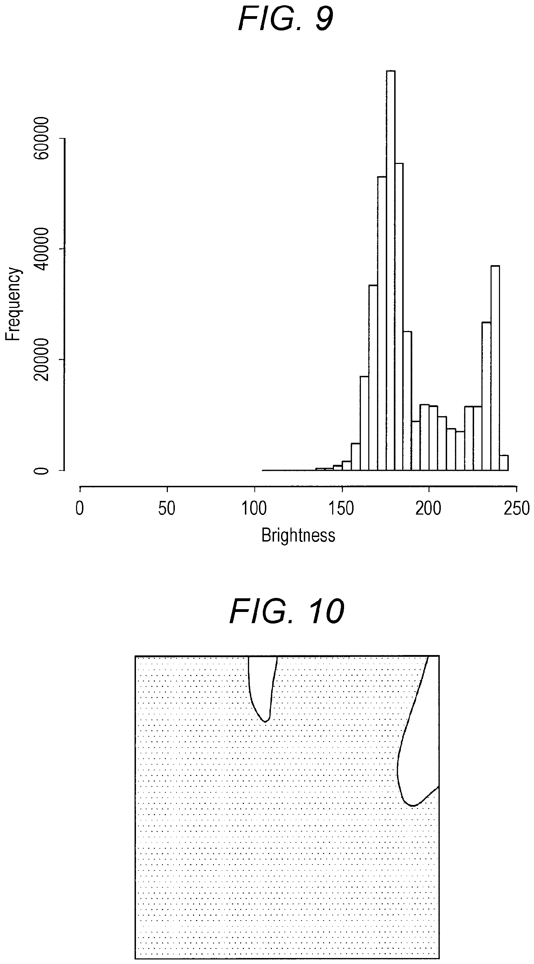

First, an example illustrated in Figs. 8 and 9 will be described. Fig. 8 illustrates an example of an image captured by a predetermined imaging unit in a case where the angle of view of the imaging unit is shielded by a hand, and illustrates a case in which the distance between the imaging unit and the hand is about 20 cm. In the example illustrated in Fig. 8, only a part of the angle of view of the imaging unit is shielded by the hand, and a background not shielded by the hand is in an identifiable situation. Furthermore, Fig. 9 is a graph illustrating distribution of the luminance of pixels of the image illustrated in Fig. 8. In Fig. 9, the horizontal axis represents the luminance of pixels and the vertical axis represents the frequency. Furthermore, in the example illustrated in Fig. 9, the luminance of each pixel indicates a value of 0 to 255, and the higher the value, the higher the luminance. As illustrated in Fig. 9, it can be seen that a large number of pixels with relatively high luminance is distributed in the case of the example illustrated in Fig. 8. This is because, in the case of the example illustrated in Fig. 8, since only a part of the angle of view of the imaging unit is shielded by the hand, leakage of light of an external environment through a region not shielded by the hand is presumed to contribute.

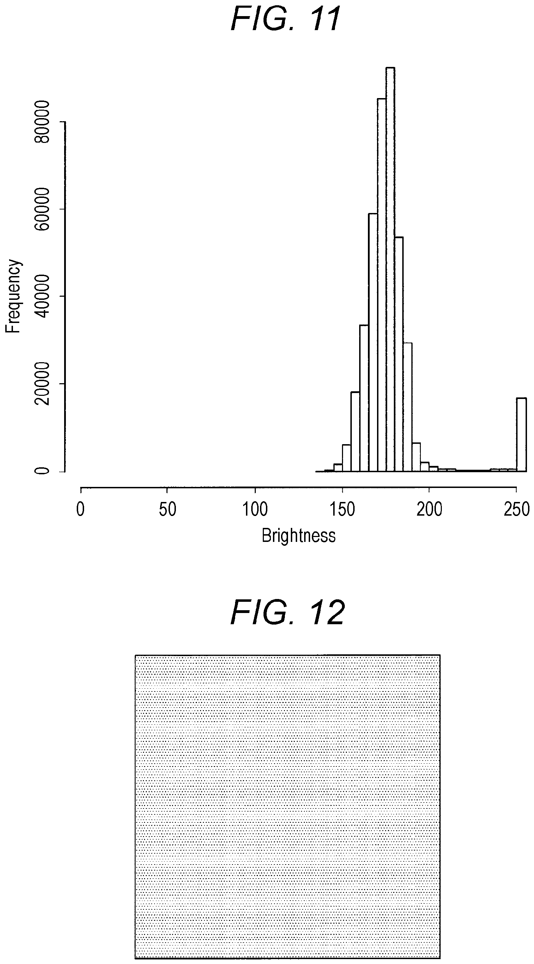

Next, an example illustrated in Figs. 10 and 11 will be described. Fig. 10 illustrates an example of an image captured by a predetermined imaging unit in a case where the angle of view of the imaging unit is shielded by a hand, and illustrates a case in which the distance between the imaging unit and the hand is about 10 cm. In the example illustrated in Fig. 10, a region shielded by the hand in the angle of view of the imaging unit is wider and the brightness of the entire image is also darker than the example illustrated in Fig. 8. Furthermore, Fig. 11 is a graph illustrating distribution of the luminance of pixels of the image illustrated in Fig. 10. Note that the horizontal axis and the vertical axis in Fig. 11 are similar to the graph illustrated in Fig. 9. As can be seen by comparing Fig. 11 with Fig. 9, more pixels with lower luminance are distributed in the image illustrated in Fig. 10 than the image illustrated in Fig. 8. In other words, it can be seen that the brightness of the entire image illustrated in Fig. 10 is darker than the brightness of the entire image illustrated in Fig. 8.

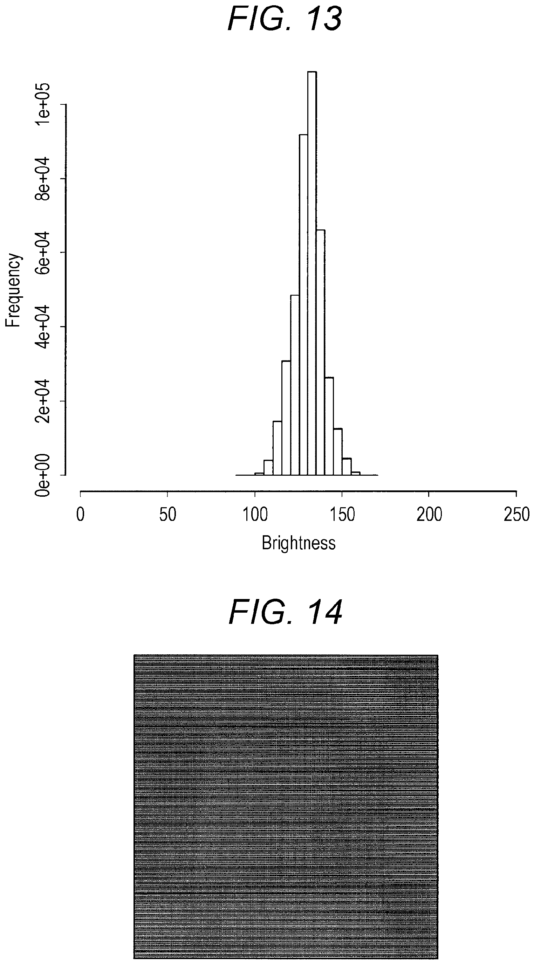

Next, an example illustrated in Figs. 12 and 13 will be described. Fig. 12 illustrates an example of an image captured by a predetermined imaging unit in a case where the angle of view of the imaging unit is shielded by a hand, and illustrates a case in which the distance between the imaging unit and the hand is about 1 cm. In the example illustrated in Fig. 12, since almost the entire angle of view of the imaging unit is shielded, it is difficult to identify the background. Furthermore, Fig. 13 is a graph illustrating distribution of the luminance of pixels of the image illustrated in Fig. 12. Note that the horizontal axis and the vertical axis in Fig. 13 are similar to the graph illustrated in Fig. 9. As can be seen by comparing Fig. 13 with Fig. 11, more pixels with lower luminance are distributed in the image illustrated in Fig. 12 than the image illustrated in Fig. 10. Note that as illustrated in Fig. 13, each pixel exhibiting slightly brighter luminance than black is presumed to be caused by leakage of light of the external environment through a gap between the imaging unit and the hand.

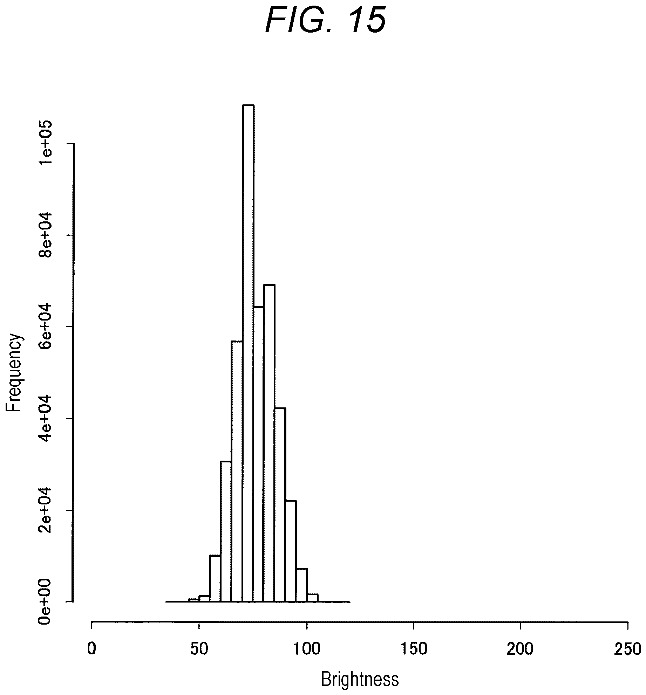

Next, an example illustrated in Figs. 14 and 15 will be described. Fig. 14 illustrates an example of an image captured by the predetermined imaging unit in a case where the angle of view of the imaging unit is shielded by a hand, and illustrates a case in which the distance between the imaging unit and the hand is about 1 mm. In the example illustrated in Fig. 14, since almost the entire angle of view of the imaging unit is shielded, it is difficult to identify the background, similarly to the example illustrated in Fig. 12. Furthermore, Fig. 15 is a graph illustrating distribution of the luminance of pixels of the image illustrated in Fig. 14. Note that the horizontal axis and the vertical axis in Fig. 15 are similar to the graph illustrated in Fig. 9. As can be seen by comparing Fig. 15 with Fig. 13, more pixels with lower luminance are distributed in the image illustrated in Fig. 14 than the image illustrated in Fig. 12. This is presumably caused because the gap between the imaging unit and the hand is narrower than the example illustrated in Figs. 12 and 13, and the amount of light leaking from the external environment proportionally decreases.

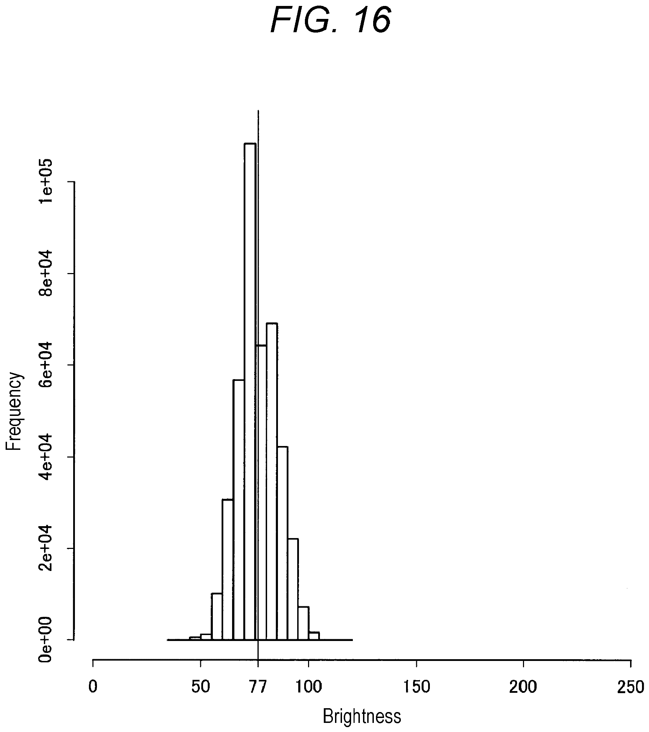

According to the above description, in the case of the imaging unit used in the present examples, the case where the distribution of the luminance of the pixels of the captured image becomes the distribution as illustrated in Fig. 16 can be regarded as a boundary (threshold value) for determining whether or not substantially the entire angle of view of the imaging unit is shielded. In other words, in the imaging unit used in the present examples, the case where the average value of the luminance of the pixels of the captured image shows a value equal to or smaller than 77 can be regarded that substantially the entire angle of view of the imaging unit is shielded.

Note that the examples described in the present examples are mere examples, and it is indisputable that the threshold value for determining whether or not substantially the entire angle of view of the imaging unit is shielded can be changed as appropriate according to various conditions such as the configuration of the imaging unit, an installation position, and an installation method.

As described above, an example of the method of determining whether or not substantially the entire angle of view of a predetermined imaging unit is shielded on the basis of the brightness of an image captured by the imaging unit has been described citing specific examples with reference to Figs. 8 to 16, as examples.

### <3.5. Modification>

Next, modifications of the information processing system 1 according to the present embodiment will be described.

### (First Modification: Notification of information regarding a shielding situation of the angle of view of the imaging unit)

First, as a first modification, an example of a user interface of a case of notifying the user of a situation where the angle of view of the imaging unit is shielded will be described.

The user has a difficulty in directly viewing another part other than a part located in front of the eyes, of parts of the input/output device 20 according to a mounted state due to the characteristics of the head-mounted device like the input/output device 20 that is used by being worn on the head. Therefore, for example, in the case where the imaging units 201a and 201b illustrated in Fig. 2 are used to determine the user input, there are cases where the user has a difficult in directly viewing the imaging units 201a and 201b in a state of wearing the input/output device 20.

In view of the above situation, the information processing apparatus 10 according to the first modification may notify the user of the shielding situation by outputting notification information according to the shielding situation of the angles of view of the imaging units to be used to determine the user input.

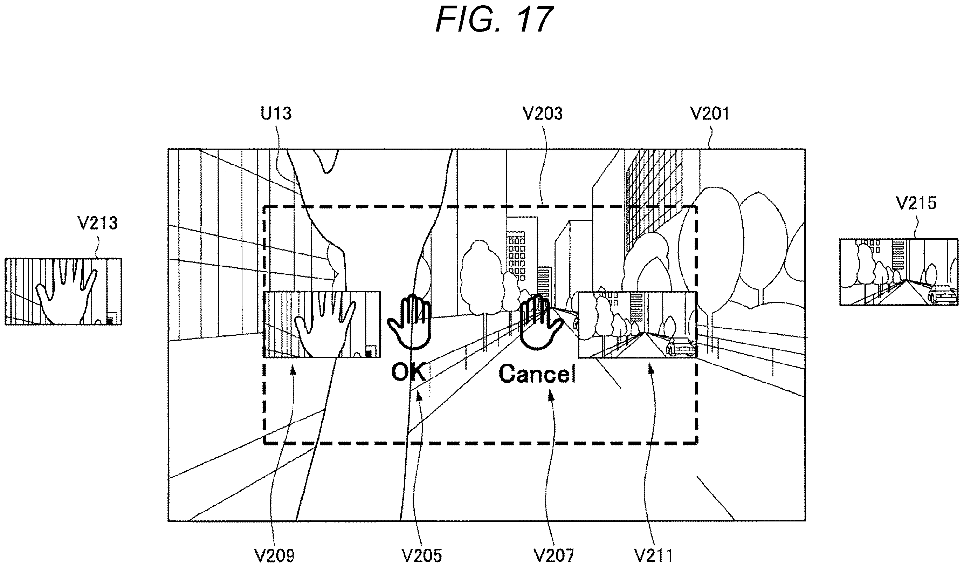

For example, Fig. 17 is an explanatory diagram for describing an example of a user interface according to the first modification. Note that, in the present description, an example of the user interface will be described assuming the use of the input/output device 20 illustrated in Fig. 2 and assuming that the imaging units 201a and 201b are used to determine the user input. Furthermore, in Fig. 17, objects denoted by the reference signs V201 to V207 respectively correspond to objects denoted by the reference signs V101 to V107 in the example described with reference to Fig. 6. Therefore, detailed description is omitted.

In the example illustrated in Fig. 17, the images respectively captured by the imaging units 201a and 201b used to determine the user input are displayed in a drawing region V203, as represented by the reference signs V209 and V211. With such a configuration, the images respectively captured by the imaging units 201a and 201b are presented to the user via the display unit 211.

For example, in Fig. 17, the reference sign V213 represents the image captured by the imaging unit 201b located on a relatively left side with respect to the user who wears the input/output device 20, and the image is displayed in the region represented by the reference sign V209. Furthermore, the imaging unit 201b is associated with the operation menu corresponding to the display information V205. Under such circumstances, in a case of selecting the operation menu corresponding to the display information V205, for example, the user confirms the image V213 illustrated in the region V209, thereby visually confirming the situation where the angle of view of the imaging unit 201b is shielded (in other words, whether or not substantially the entire angle of view is shielded). For example, in the example illustrated in Fig. 17, the angle of view of the imaging unit 201b is shielded by the hand of the user represented by the reference sign U13, and the hand U13 of the user is captured as an object in the image V213.

Similarly, the reference sign V215 represents the image captured by the imaging unit 201a located on a relatively right side with respect to the user who wears the input/output device 20, and the image is displayed in the region represented by the reference sign V211. Furthermore, the imaging unit 201a is associated with the operation menu corresponding to the display information V207. Under such circumstances, in a case of selecting the operation menu corresponding to the display information V207, for example, the user confirms the image V215 illustrated in the region V211, thereby visually confirming the situation where the angle of view of the imaging unit 201a is shielded (in other words, whether or not substantially the entire angle of view is shielded).

With the above configuration, even in a case where the user has a difficulty in directly viewing the imaging unit used to determine the user input, the user can shield the angle of view of the imaging unit with the hand or the like while confirming the image presented via the display unit 211.

Note that the example described with reference to Fig. 17 is a mere example, and the information to be notified (in other words, the notification information), the method of notifying the information, and the like are not particularly limited as long as the situation where the angle of view of the imaging unit to be used to determine the user input is shielded can be notified to the user.

For example, the information processing apparatus 10 may present the notification information according to the situation where the angle of view of the imaging unit to be used to determine the user input (for example, a shielded ratio) to the user via the audio output unit such as a speaker as an audio. As a specific example, in a case where the angle of view of the imaging unit located on the relatively left side with respect to the user is shielded, the information processing apparatus 10 may output an audio such as sound effects with a volume according to the shielded ratio of the angle of view from the speaker located on the relatively left side with respect to the user. As a more specific example, the information processing apparatus 10 may perform control such that the volume of the audio to be output from the speaker becomes larger as the hand of the user approaches the predetermined imaging unit (in other words, the brightness of the image captured by the imaging unit becomes darker).

As described above, as the first modification, an example of the user interface of the case of notifying the user of the situation where the angle of view of the imaging unit is shielded has been described with reference to Fig. 17.

### (Second Modification: Presentation of information regarding a shielding method of the angle of view of the imaging unit)

Next, as a second modification, an example of a method of notifying the user of a method of shielding the angle of view of the imaging unit will be described.

As described above, in the head-mounted device like the input/output device 20, the user has a difficulty in directly viewing another part other than a part located in front of the eyes, of parts of the input/output device 20, according to a mounted state. Therefore, in the state where the user wears the input/output device 20, there are some cases where the user has a difficulty in directly viewing the imaging units (for example, the imaging units 201a and 201b illustrated in Fig. 2) to be used to determine the user input.

In view of the above situation, the information processing apparatus 10 according to the second modification may notify the user of notification information for notifying a method of shielding the angle of view of the noise image unit to be used to determine the user input (in other words, an operation method).

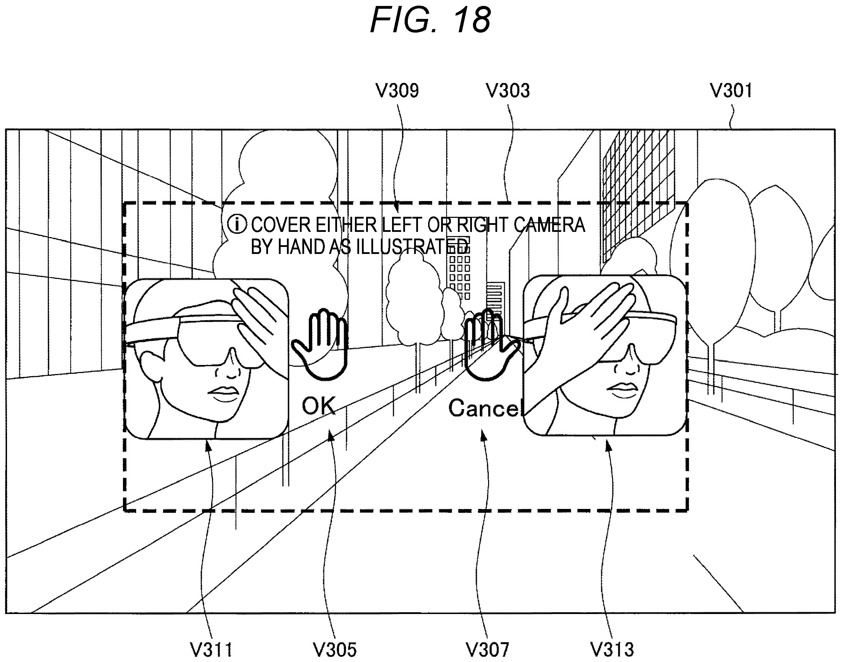

For example, Fig. 18 is an explanatory diagram for describing an example of a user interface according to the second modification. Note that, in the present description, an example of the user interface will be described assuming the use of the input/output device 20 illustrated in Fig. 2 and assuming that the imaging units 201a and 201b are used to determine the user input. Furthermore, in Fig. 18, objects denoted by the reference signs V301 to V307 respectively correspond to objects denoted by the reference signs V101 to V107 in the example described with reference to Fig. 6. Therefore, detailed description is omitted.

The information processing apparatus 10 according to the second modification presents the notification information for notifying the operation method (in other words, the method of shielding the angle of view of the imaging unit) in a case where an undetected state of the user input continues for a predetermined period or longer, after prompting the user to perform an operation.

For example, in the example illustrated in Fig. 18, the information processing apparatus 10 prompts the user to perform an operation by presenting notification information V309 in a drawing region V303. Furthermore, the information processing apparatus 10 notifies the user of the operation method by presenting notification information V311 and V313 in a case where the undetected state of the user input continues for a predetermined period or longer, after presenting the notification information V309.

Specifically, the notification information V311 illustrates the method of shielding the angle of view of the imaging unit 201b located on the relatively left side with respect to the user as an image, as an operation method for selecting the operation menu corresponding to the display information V305. In other words, the information processing apparatus 10 notifies the user of the operation method for selecting the operation menu corresponding to the display information V305 by presenting the notification information V311 near the display information V305.

Furthermore, the notification information V313 illustrates the method of shielding the angle of view of the imaging unit 201a located on the relatively right side with respect to the user as an image, as an operation method for selecting the operation menu corresponding to the display information V307. In other words, the information processing apparatus 10 notifies the user of the operation method for selecting the operation menu corresponding to the display information V307 by presenting the notification information V313 near the display information V307.

Note that the example illustrated in Fig. 18 is a mere example, and the type of the notification information and the notification method are not necessarily limited to the example illustrated in Fig. 18 as long as the operation method (in other words, the method of shielding the angle of view of the imaging unit) can be notified to the user.

As described above, as the second modification, an example of the method of notifying the user of the method of shielding the angle of view of the imaging unit has been described with reference to Fig. 18.

### (Third Modification: An example of a method of recognizing user inputs according to shielding situations)

Next, as a third modification, an example of a method of confirming user inputs according to shielding situations of the angle of view of the imaging unit will be described.

In the embodiment described above, the information processing apparatus 10 has recognized the user input according to whether or not substantially the entire angle of view of a predetermined imaging unit is shielded. In contrast, the information processing apparatus 10 according to the third modification identifies a first shielding state and a second shielding state with a smaller shielding amount of the angle of view than the first shielding state, as shielding states of the angle of view of a predetermined imaging unit, and recognizes the first and second shielding states as different user inputs. Note that the first shielding state includes, for example, a state in which substantially the entire angle of view of the predetermined imaging unit is shielded. In contrast, the second shielding state includes a state in which only a part of the angle of view of the imaging unit is shielded. Note that the following description will be given on the assumption that the information processing apparatus 10 identifies the state in which substantially the entire angle of view of the predetermined imaging unit is shielded and the state in which only a part of the angle of view is shielded.

As a specific example, in a case where the state in which substantially the entire angle of view of the predetermined imaging unit is shielded is associated with a state in which a predetermined button is pressed, the state in which only a part of the angle of view is shielded may be associated with a state in which the button is half-pressed.

Note that criteria for distinguishing each of a state in which the angle of view is not shielded, the state in which only a part of the angle of view is shielded, and the state in which substantially the entire angle of view is shielded are not particularly limited, and is only required to set as appropriate according to a use form. As a specific example, in a case of distinguishing the user input on the basis of the brightness of the image captured by the imaging unit, threshold values for distinguishing the state in which only a part of the angle of view is shielded and the state in which substantially the entire angle of view is shielded are only required to be set as appropriate.

As described above, as the third modification, an example of the method of confirming user inputs according to shielding situations of the angle of view of the imaging unit has been described.

### (Fourth Modification: An example of control according to the external environment)

Next, as a fourth modification, an example of control regarding determination of the user input according to the external environment will be described.

In the case of determining whether or not substantially the entire angle of view of the predetermined imaging unit is shielded according to the brightness of the image captured by the imaging unit, as described as an example, there are some cases where the brightness of the image changes according to the brightness of the external environment. Here, the "brightness of the external environment" may be regarded as intensity of ambient light around the information processing apparatus 10 in a state where the angle of view of the imaging unit is not shielded. Therefore, for example, an aspect of change in the brightness of an image to be captured according to whether or not the angle of view of the imaging unit is shielded differs depending on whether or not the external environment is bright or dark. For example, under a situation where the external environment is relatively bright, the amount of change in brightness of the image to be captured according to whether or not substantially the entire angle of view of the imaging unit is blocked becomes relatively large. In contrast, under a situation where the external environment is relatively dark, the amount of change in brightness of the image to be captured according to whether or not substantially the entire angle of view of the imaging unit is blocked becomes relatively small.

In view of such a situation, the information processing apparatus 10 according to the fourth modification may separately detect the brightness of the external environment by, for example, an illuminance sensor or the like, and dynamically control a threshold value for determining whether or not substantially the entire angle of view of a predetermined imaging unit is shielded according to the detection result.

Furthermore, when the external environment becomes extremely dark, there are some cases where determination as to whether or not the angle of view of the imaging unit is shielded becomes difficult. Therefore, for example, in a case where the detection result of the brightness of the external environment is equal to or less than a threshold value, the information processing apparatus 10 according to the fourth modification may temporarily suppress the determination as to whether or not the angle of view of the imaging unit is shielded (in other words, recognition of the user input).

Note that the method is not necessarily limited to the method using an illuminance sensor as long as the recognition of the user input can be temporarily suppressed according to whether or not the external environment is bright. For example, under a situation where the external environment is bright, an image captured by another imaging unit becomes bright in a case where substantially the entire angle of view of only part of a plurality of imaging units is shielded. In contrast, under a situation where the external environment is dark, the image captured by another imaging unit becomes dark even in the case where substantially the entire angle of view of only part of a plurality of imaging units is shielded. From such characteristics, for example, only in a case where the information processing apparatus 10 determines that substantially the entire angle of view of only part of the plurality of imaging units is shielded (in other words, in a case where the number of imaging units with substantially the entire angle of view determined to be shielded is equal to or smaller than a threshold value), the information processing apparatus 10 may recognize the user input according to the shielding situation. In other words, the information processing apparatus 10 may limit the recognition of the user input in a case where the number of imaging units with substantially the entire angle of view determined to be shielded exceeds the threshold value (in a case where substantially the entire angles of view of all of the plurality of imaging units are determined to be shielded, accordingly).

As described above, as the fourth modification, an example of the control regarding determination of the user input according to the external environment has been described.

### (Fifth Modification: An example of recognizing a user input using a plurality of imaging units)

Next, as a fifth modification, an example of a method of recognizing a user input using a plurality of imaging units will be described.

In the above-described embodiment, an example of the case of recognizing the user input according to which substantially the entire angle of view of an imaging unit is shielded, focusing on the case where the number of imaging units used to recognize the user input is two or less, has been mainly described.

Meanwhile, in a case of considering a case where the user shields an angle of view of an imaging unit using a hand, the user can shield respective angles of view of two imaging units using both hands, for example.

Therefore, for example, the information processing apparatus 10 may recognize the user input according to a combination of imaging units where substantially the entire views of angle are shielded, of a plurality of imaging units. As a specific example, in a case of assuming that four imaging units are used to recognize the user input and shielding the angle of view of each imaging unit by hand, the angles of view of up to two of the four imaging units are shielded. In such a case, six states (₄C₂) each corresponding to a combination of two imaging units where the angles of view is shielded, of the four imaging units, and four states (₄C₁) each corresponding to a case where the angle of view of only one of the four imaging units is shielded can be individually recognized as different user inputs.

As described above, the information processing apparatus 10 may recognize the user input according to the combination of imaging units where substantially the entire views of angle are shielded, of a plurality of imaging units.

Note that, under circumstances where the angles of view of a plurality of (two, for example) imaging units are simultaneously shielded, there are some cases where the user is forced to use both hands to shield the angles of view of the imaging units according to the positional relationship among the plurality of imaging units. For example, as in the case of the imaging units 201a and 201b illustrated in Fig. 2, a plurality of imaging units used for recognition of the real object, self-position estimation, and the like is often held separated from each other, and in many cases, simultaneously shielding substantially the entire angles of view of the imaging units is difficult. Therefore, in a case of shielding substantially the entire angles of view of both the imaging units 201a and 201b, an intentional operation using both hands is required, and it is presumed that there is little chance of accidental occurrence of a situation where substantially the entire angles of view of both the imaging units 201a and 201b are shielded.

Using such a characteristic, for example, a function that requires an explicit instruction from the user, such as shutdown, may be assigned to a combination of imaging units for which shielding of the angles of view is difficult without using both hands. With such a configuration, occurrence of a situation in which the function accidentally operates due to an erroneous recognition or the like can be prevented. Note that it is indisputable that the function assigned to the above operation is not limited to shutdown. For example, for example, a function (so-called undo) to cancel previously executed processing may be assigned to the above operation.

Furthermore, as another example, the information processing apparatus 10 may determine which substantially entire angle of view of an imaging unit, of the plurality of imaging units, has been shielded in time division manner in a predetermined time width, and recognize the user input according to the imaging unit in which substantially the entire angle of view has been shielded and the timing when the shielding has been determined.

For example, even in a case of using the imaging units 201a and 201b illustrated in Fig. 2 to recognize the user input, the information processing apparatus 10 may recognize different user inputs according to the order in which the respective angles of view are shielded in time division. In other words, the information processing apparatus 10 may recognize a case in which the respective angles of view are shielded in order of the imaging unit 201a and the imaging unit 201b and a case in which the respective angles of view are shielded in order of the imaging unit 201b and the imaging unit 201a as different user inputs from each other.

As a more specific example, it is assumed that after substantially the entire angle of view of the imaging unit 201b located on the relatively left side with respect to the user is shielded, substantially the entire angle of view of the imaging unit 201a located on the relatively right side with respect to the user is shielded. In this case, the information processing apparatus 10 may recognize that an operation having directivity from the left side to the right side has been performed, according to timing when the respective angles of view of the imaging units 201b and 201a are shielded.

Furthermore, it is assumed that after substantially the entire angle of view of the imaging unit 201a located on the relatively right side with respect to the user is shielded, substantially the entire angle of view of the imaging unit 201b located on the relatively left side with respect to the user is shielded. In this case, the information processing apparatus 10 may recognize that an operation having directivity from the right side to the left side has been performed, according to timing when the respective angles of view of the imaging units 201a and 201b are shielded.

By the above control, the information processing apparatus 10 can also recognize the operation having directionality, such as a so-called swipe operation.

Furthermore, as another example, the information processing apparatus 10 may recognize different user inputs according to a direction of installation of the imaging unit in which substantially the entire angle of view is shielded, of the plurality of imaging units. For example, in a case of applying the input interface according to the present embodiment to a device such as a smartphone, it may be recognized that the device is placed upside down and may be locked in a case where substantially the entire angle of view of the imaging unit on a front side is shielded.

As described above, as the fifth modification, an example of the method of recognizing the user input using a plurality of imaging units has been described.

### (Sixth Modification: An example of a method of recognizing a user input according to an imaging state)

Next, as a sixth modification, as an example of a method of recognizing a user input using an imaging unit, a case of using an imaging state of an image by the imaging unit for the recognition of the user input will be described.

Specifically, under circumstances where substantially the entire angle of view of a predetermined imaging unit is shielded, various states relating to capture of an image may be different from a case where the angle of view is not shielded. As a specific example, when the user's hand or the like approaches the imaging unit and substantially the entire angle of view of the imaging unit is shielded, a situation where focus control (for example, autofocus (AF)) by the imaging unit fails can be assumed. Therefore, for example, in a case where the focus control by a predetermined imaging unit fails, the information processing apparatus 10 may determine that substantially the entire angle of view of the imaging unit is shielded.

Note that the above description is a mere example, and the imaging state used to recognize the user input is not necessarily limited to the state of the focus control as long as a different state (different parameter) is exhibited according to whether or not substantially the entire angle of view of the imaging unit is shielded. As a specific example, the information processing apparatus 10 may use a state of exposure control (automatic exposure (AE)) or the like for the determination as to whether or not substantially the entire angle of view of the imaging unit is shielded (in other words, recognition of the user input).

As described above, as the sixth modification, as an example of the method of recognizing a user input using an imaging unit, the case of using the imaging state of an image by the imaging unit for the recognition of the user input has been described.

### (Seventh Modification: An example of a method of preventing erroneous recognition of a user input)

Next, as a seventh modification, an example of a method of preventing erroneous recognition of the user input in the information processing system 1 according to the present embodiment will be described.

As described above, in the information processing system 1 according to the present embodiment, the information processing apparatus 10 recognizes the user input by determining whether or not substantially the entire angle of view of the predetermined imaging unit used to recognize the user input has been shielded. Meanwhile, the situation in which the angle of view of the imaging unit is shielded is not necessarily limited to the case in which the user intentionally shields the angle of view using a hand or the like.

As a specific example, a situation in which the angle of view of the imaging unit is temporarily shielded when some sort of object (for example, another person other than the user) crosses in front of the imaging unit can be assumed. Furthermore, in a situation where the user is positioned near a wall, only a wall surface of the wall is captured in the image captured by the imaging unit, and a situation where it is determined that the angle of view of the imaging unit is shielded may accidentally occur.

In view of such a situation, in a case where the information processing apparatus 10 determines that substantially the entire angle of view of a predetermined imaging unit is shielded, the information processing apparatus 10 may prevent erroneous recognition of the user input by verifying whether or not the shielded state of the angle of view is caused by an intentional operation of the user.

For example, in a case of determining whether or not substantially the entire angle of view of a predetermined imaging unit is shielded on the basis of the image captured by the imaging unit, the information processing apparatus 10 may verify whether or not the angle of view has been shielded by an intentional operation of the user, according to a form of change in the image before and after the determination.

As a specific example, focusing on the case in which the user moves near a wall, only a wall surface of the wall is captured in the image captured by the imaging unit, and it is determined that the angle of view of the imaging unit is shielded. In this case, change in the image (for example, change in brightness) is more moderate before and after the determination that the angle of view of the imaging unit is shielded than the case where the user intentionally shields the angle of view of the imaging unit by hand or the like. Note that the change in the image may be regarded as change in the shielding amount of the angle of view. In a case where the information processing apparatus 10 determines that at least part of the angle of view of a predetermined imaging unit is shielded, for example, the information processing apparatus 10 may verify whether or not the angle of view is shielded by an intentional operation of the user, according to a change rate (a change rate of the shielding amount) of the image captured by the imaging unit before and after the determination, using such a characteristic. In other words, the information processing apparatus 10 determines whether or not recognizing the operation input according to the change rate of the shielding amount of the angle of view of the imaging unit. Note that, in a case where the change rate is equal to or larger than a predetermined value, it may be determined that the angle of view is shielded by the intentional operation of the user. In other words, the user's operation input may be recognized in a case where the change rate is equal to or larger than the predetermined value. Alternatively, in a case where the change rate is equal to or smaller than the predetermined value, recognition of the user's operation input may be limited.

Furthermore, the information processing apparatus 10 may set a determination time for determining whether or not substantially the entire angle of view of a predetermined imaging unit is shielded. In other words, the information processing apparatus 10 may control whether or not to recognize the user input according to duration time of a predetermined shielding state. More specifically, the information processing apparatus 10 may recognize that the angle of view is shielded by the intentional operation of the user in a case where the state in which substantially the entire angle of view of a predetermined imaging unit is shielded continues for the determination time or longer (in other words, the duration time becomes equal to or longer than the determination time). With such control, for example, the angle of view of the imaging unit is temporarily shielded when some sort of object (for example, another person other than the user) crosses in front of the imaging unit, and occurrence of a situation where the user input is erroneously recognized accordingly can be prevented.

Furthermore, in a case where a plurality of imaging units is used to recognize the user input, the information processing apparatus 10 may control the determination time according to a combination of the imaging units in which substantially the entire angles of view are shielded.

As a specific example, in a situation where the angles of view of the plurality of imaging units are shielded as in the case where the angles of view of two imaging units are shielded by both hands of the user, a possibility that the angles of view are shielded by the intentional operation of the user is high. Therefore, in such a case, the information processing apparatus 10 may control the determination time to become relatively short. In contrast, a situation where the angle of view of only one of the plurality of imaging units is shielded is not necessarily generated only by the intentional operation of the user, and may be accidentally generated. Therefore, in this case, the information processing apparatus 10 may control the determination time to become longer than the case where the angles of view of the plurality of imaging units are shielded.

Furthermore, as another example, the information processing apparatus 10 may verify whether or not the angle of view is shielded by the intentional operation of the user, using detection results of the distance between the imaging unit and an object (for example, a hand or the like) that shields the angle of view of the imaging unit using various sensors such as a distance measuring sensor and a proximity sensor.

Specifically, in a case where the angles of view of the imaging units (for example, the imaging units 201a and 201b) provided in the input/output device 20 are shielded by an object, a situation where the distance between the imaging units and a shielding object becomes about several centimeters is extremely limited except the case where the angles of view are shielded by the intentional operation of the user. For example, even if a situation where another person other than the user crosses in front of the imaging unit is assumed, the distance between the imaging unit and the another person is presumably separated by at least several tens of centimeters. In view of such a situation, for example, in a case where the information processing apparatus 10 determines that the angle of view of a predetermined imaging unit is shielded, the information processing apparatus 10 may recognize that the angle of view is shielded by the intentional operation of the user in a case where the detection result of the distance between the imaging unit and the shielding object is equal to or smaller than a threshold value.

Furthermore, as separately described as the fourth modification, the information processing apparatus 10 may prevent occurrence of erroneous recognition that the angle of view of the imaging unit is shielded due to dark external environment by temporarily suppressing recognition of the user input according to the brightness of the external environment with an illuminance sensor or the like.

As described above, as the seventh modification, an example of the method of preventing erroneous recognition of the user input in the information processing system 1 according to the present embodiment has been described.

### (Eighth Modification: An example of control combined with another input interface)

Next, as an eighth modification, an example of control in a case where the input interface according to the present embodiment is combined with another input interface will be described. Specifically, in the eighth modification, a case of controlling a recognition result of a user input via another input interface, using a recognition result of the user input based on the input interface according to the present embodiment as a function similar to a shift key in keyboard input will be described.

For example, in the keyboard input, the number of recognizable user inputs is determined according to the number of keys from the characteristic of recognizing the user input according to a pressed key. Meanwhile, in the keyboard input, the user input recognized according to a pressed key can be selectively switched according to whether or not the shift key is pressed. With such a mechanism, in the keyboard input, a larger number of patterns of user inputs than the number of keys can be recognized.

In the information processing system 1 according to the eighth modification, for example, in a case where it is determined that substantially the entire angle of view of a predetermined imaging unit is shielded, the information processing apparatus 10 may recognize that switching of a recognition result of a user input to be subsequently input has been instructed.

For example, the input interface according to the present embodiment can be combined with a gesture input. As a specific example, description will be given using a case where a gesture such as tapping is performed on a virtual object presented to be superimposed on a real space on the basis of the AR technology. For example, in a case where a gesture of simply tapping the virtual object is performed, the information processing apparatus 10 recognizes that the gesture as an operation for selecting the target virtual object. In contrast, in a case where the gesture of tapping the virtual object is performed after substantially the entire angle of view of a predetermined imaging unit is shielded, the information processing apparatus 10 may recognize that the gesture as an operation to erase the target virtual object.

Furthermore, the correspondence between a predetermined gesture and a user input recognized with the gesture may be selectively switched according to a combination of imaging units in which substantially the entire angles of view are shielded. As a specific example, in a case where the imaging units 201a and 201b illustrated in Fig. 2 are used, different user inputs from each other may be recognized on the basis of a gesture to be sequentially input according to which substantially entire angle of view of the imaging units 201a and 201b is shielded. Furthermore, in a case where substantially the entire angles of view of both the imaging units 201a and 201b are shielded, a user input different from the case where substantially the entire angle of view of only one of the imaging units 201a and 201b is shielded may be recognized on the basis of a gesture to be sequentially input.

As described above, the input interface according to the present embodiment can also be used as a trigger for detecting a predetermined operation via another input interface. With the above configuration, for example, a larger number of types of user inputs than the number of patterns of gestures can be recognized with the limited number of patterns of gestures. In other words, a plurality of user inputs different from each other can be associated with a gesture of a predetermined pattern. Therefore, the number of recognizable patterns can be limited. Therefore, by combining the input interface according to the present embodiment with the gesture input, for example, effects such as improvement in accuracy of gesture recognition and reduction of processing load relating to gesture recognition can be expected.

Note that, as described above, in the case of controlling the recognition result of the user input via another input interface on the basis of the input interface according to the present embodiment, the information processing apparatus 10 may notify the user of the situation of control. As a specific example, in the case where the information processing apparatus 10 has switched the correspondence between the gesture to be input and the user input because substantially the entire angle of view of the predetermined imaging unit is shielded, the information processing apparatus 10 may feed back display information indicating that the switching has been performed to the user via the display unit 211. With such control, the user can recognize that the correspondence between the gesture to be input and the user input recognized with the gesture has been switched.

Furthermore, in the above description, an example of the case of combining the input interface according to the present embodiment with the gesture input has been described. However, it is indisputable that another input interface to be combined with the input interface according to the present embodiment is not limited only to the gesture input.

As described above, as the eighth modification, an example of control in the case where the input interface according to the present embodiment is combined with another input interface has been described.

### (Ninth Modification: An example of recognizing a user input using a sound collection unit)

Next, as a ninth modification, an example of a case of implementing a function equivalent to the input interface according to the present embodiment using a device different from an imaging unit will be described. Note that, in the ninth modification, an example of a case of using a sound collection unit like a microphone to recognize the user input, instead of an imaging unit, will be described.

Specifically, when the user intentionally taps the sound collection unit, an audio generated by the tapping of the sound collection unit is collected by the sound collection unit. Such an audio may be mainly collected by the tapped sound collection unit and may not be collected by the other sound collection units in a case where a plurality of sound collection units is provided. Therefore, for example, the information processing apparatus 10 may recognize, using a sound collection unit used to recognize a user input, the user input according to a sound collection result of the audio (in other words, audio noise) generated by tapping the sound collection unit.

With such a configuration, by replacing an operation of shielding substantially the entire angle of view of a predetermined imaging unit in the information processing system 1 according to the embodiment with an operation of tapping a predetermined sound collection unit, the user input can be similarly recognize to the information processing system 1 according to the embodiment.

Furthermore, the present modification can be appropriately combined with the idea described in the other modifications. As a specific example, a plurality of sound collection units can be used to recognize the user input. In this case, the user input can be recognized according to a combination of tapped sound collection units. Furthermore, in a case where simultaneous tapping of a plurality of sound collection units is detected, it may be recognized that the possibility of intentional operation by the user is high, and a function that requires an explicit instruction from the user, such as shutdown, may be assigned to the user input according to the detection result.

Furthermore, as another example, notification information for notifying a recognition situation (for example, a graph indicating a sound collection result of the audio or the like) may be notified to the user via the display unit 211 according to the recognition situation of the user input according to the operation to the sound collection unit. Furthermore, as information indicating the operation method, notification information indicating the position of the sound collection unit may be notified to the user via the display unit 211.

As described above, as the ninth modification, an example of the case of implementing a function equivalent to the input interface according to the present embodiment using a device different from an imaging unit has been described.

### (Tenth Modification: Application to all-around camera)

Next, as a tenth modification, an example of a case of applying the input interface according to the present embodiment to a so-called all-around camera capable of capturing a 360°-entire periphery will be described.

In the case of an all-around camera, the angle of view extends over the entire periphery of the camera. Under such circumstances, for example, in the case of using the all-around camera to determine the user input, the information processing apparatus 10 may divide the angle of view of the all-around camera into a plurality of partial regions and use part of the plurality of partial regions to determine the user input. In other words, the information processing apparatus 10 may recognize the user input according to whether or not substantially an entire predetermined partial region, of the angle of view of the all-around camera, is shielded, or according to a combination of partial regions in which substantially the entire regions are shielded, of the plurality of partial regions, for example. Note that, in this case, the information processing apparatus 10 may notify the user of notification information for notifying the user of the regions used to determine the user input via the display unit 211.

As described above, as the tenth modification, an example of the case of applying the input interface according to the present embodiment to a so-called all-around camera capable of capturing a 360°-entire periphery has been described.

### <<4. Hardware Configuration»

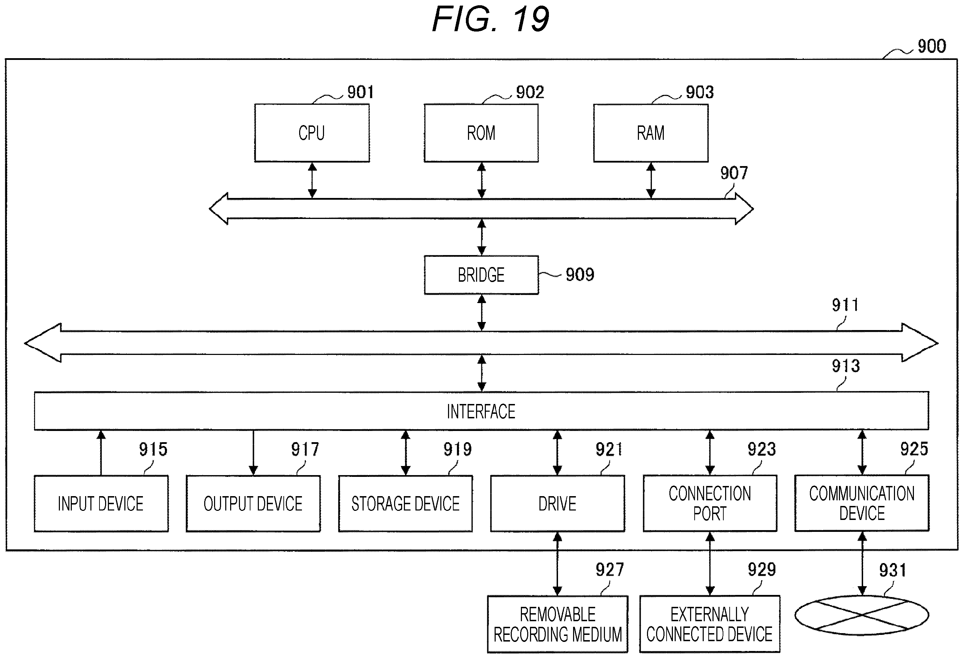

Next, an example of a hardware configuration of an information processing apparatus configuring an information processing system according to an embodiment of the present disclosure, such as the above-described information processing apparatus 10 and the input/output device 20, will be described in detail with reference to Fig. 19. Fig. 19 is a functional block diagram illustrating a configuration example of a hardware configuration of an information processing apparatus configuring an information processing system according to an embodiment of the present disclosure.

An information processing apparatus 900 configuring the information processing system according to the present embodiment mainly includes a CPU 901, a ROM 902, and a RAM 903. Furthermore, the information processing apparatus 900 moreover includes a host bus 907, a bridge 909, an external bus 911, an interface 913, an input device 915, an output device 917, a storage device 919, a drive 921, a connection port 923, and a communication device 925.

The CPU 901 functions as an arithmetic processing unit and a control unit, and controls the entire operation or a part of the operation of the information processing apparatus 900 according to various programs recorded in the ROM 902, the RAM 903, the storage device 919, or a removable recording medium 927. The ROM 902 stores programs, operation parameters, and the like used by the CPU 901. The RAM 903 primarily stores the programs used by the CPU 901, parameters that appropriately change in execution of the programs, and the like. The CPU 901, the ROM 902, and the RAM 903 are mutually connected by the host bus 907 configured by an internal bus such as a CPU bus. For example, the determination unit 101, the recognition unit 103, the processing execution unit 105, and the output control unit 107 illustrated in Fig. 5 can be configured by the CPU 901.

The host bus 907 is connected to the external bus 911 such as a peripheral component interconnect/interface (PCI) bus via the bridge 909. Furthermore, the input device 915, the output device 917, the storage device 919, the drive 921, the connection port 923, and the communication device 925 are connected to the external bus 911 via the interface 913.

The input device 915 is an operation means operated by the user, such as a mouse, a keyboard, a touch panel, a button, a switch, a lever, and a pedal, for example. Furthermore, the input device 915 may be, for example, a remote control means (so-called remote control) using infrared rays or other radio waves or an externally connected device 929 such as a mobile phone or a PDA corresponding to an operation of the information processing apparatus 900. Moreover, the input device 915 is configured by, for example, an input control circuit for generating an input signal on the basis of information input by the user using the above-described operation means and outputting the input signal to the CPU 901, or the like. The user of the information processing apparatus 900 can input various data and give an instruction on processing operations to the information processing apparatus 900 by operating the input device 915. For example, the input unit 221 illustrated in Fig. 7 can be configured by the input device 915.

The output device 917 is configured by a device that can visually or audibly notify the user of acquired information. Such devices include display devices such as a CRT display device, a liquid crystal display device, a plasma display device, an EL display device, a lamp, and the like, sound output devices such as a speaker and a headphone, and a printer device. The output device 917 outputs, for example, results obtained by various types of processing performed by the information processing apparatus 900. Specifically, the display device displays the results of the various types of processing performed by the information processing apparatus 900 as texts or images. Meanwhile, the sound output device converts an audio signal including reproduced sound data, voice data, or the like into an analog signal and outputs the analog signal. For example, the output unit 210 illustrated in Fig. 5 may be configured by the output device 917.

The storage device 919 is a device for data storage configured as an example of a storage unit of the information processing apparatus 900. The storage device 919 is configured by a magnetic storage device such as a hard disk drive (HDD), a semiconductor storage device, an optical storage device, a magneto-optical storage device, or the like, for example. The storage device 919 stores programs executed by the CPU 901, various data, and the like. For example, the storage unit 190 illustrated in Fig. 5 may be configured by the storage device 919.

The drive 921 is a reader/writer for a recording medium, and is built in or is externally attached to the information processing apparatus 900. The drive 921 reads out information recorded on the removable recording medium 927 such as a mounted magnetic disk, optical disk, magneto-optical disk, or semiconductor memory, and outputs the information to the RAM 903. Furthermore, the drive 921 can also write a record on the removable recording medium 927 such as the mounted magnetic disk, optical disk, magneto-optical disk, or semiconductor memory. The removable recording medium 927 is, for example, a DVD medium, an HD-DVD medium, a Blu-ray (registered trademark) medium, or the like. Furthermore, the removable recording medium 927 may be a CompactFlash (CF (registered trademark)), a flash memory, a secure digital (SD) memory card, or the like. Furthermore, the removable recording medium 927 may be, for example, an integrated circuit (IC) card on which a non-contact IC chip is mounted, an electronic device, or the like.

The connection port 923 is a port for being directly connected to the information processing apparatus 900. Examples of the connection port 923 include a universal serial bus (USB) port, an IEEE 1394 port, a small computer system interface (SCSI) port, and the like. Other examples of the connection port 923 include an RS-232C port, an optical audio terminal, a high-definition multimedia interface (HDMI) (registered trademark) port, and the like. By connecting the externally connected device 929 to the connection port 923, the information processing apparatus 900 directly acquires various data from the externally connected device 929 and provides various data to the externally connected device 929.

The communication device 925 is, for example, a communication interface configured by a communication device for being connected to a communication network (network) 931, and the like The communication device 925 is, for example, a communication card for a wired or wireless local area network (LAN), Bluetooth (registered trademark), a wireless USB (WUSB), or the like. Furthermore, the communication device 925 may be a router for optical communication, a router for an asymmetric digital subscriber line (ADSL), a modem for various communications, or the like. The communication device 925 can transmit and receive signals and the like to and from the Internet and other communication devices in accordance with a predetermined protocol such as TCP/IP, for example. Furthermore, the communication network 931 connected to the communication device 925 is configured by a network or the like connected by wire or wireless means, and may be, for example, the Internet, home LAN, infrared communication, radio wave communication, satellite communication, or the like.

An example of the hardware configuration which can implement the functions of the information processing apparatus 900 configuring the information processing system according to the embodiment of the present disclosure has been described. Each of the above-described constituent elements may be configured using general-purpose members or may be configured by hardware specialized for the function of each constituent element. Therefore, the hardware configuration to be used can be changed as appropriate according to the technical level of the time of carrying out the present embodiment. Note that, although not illustrated in Fig. 19, various configurations corresponding to the information processing apparatus 900 configuring the information processing system are naturally provided.

Note that a computer program for realizing the functions of the information processing apparatus 900 configuring the information processing system according to the above-described present embodiment can be prepared and implemented on a personal computer or the like. Furthermore, a computer-readable recording medium in which such a computer program is stored can also be provided. The recording medium is, for example, a magnetic disk, an optical disk, a magneto-optical disk, a flash memory, or the like. Furthermore, the above computer program may be delivered via, for example, a network without using a recording medium. Furthermore, the number of computers that execute the computer program is not particularly limited. For example, a plurality of computers (for example, a plurality of servers or the like) may execute the computer program in cooperation with one another.

### <<5. Conclusion»

As described above, in the information processing system 1 according to the present embodiment, the information processing apparatus 10 determines whether or not substantially the entire angle of view of a predetermined imaging unit to be used to recognize a user input is shielded, and recognizes the user input according to the determination result. With such a configuration, even in a state where the user wearing the head-mounted device like the input/output device 20 according to the present embodiment, for example, the user can perform a predetermined operation without an input device provided in a housing of the device (in other words, without an input device difficult to directly view).

Furthermore, in the information processing system 1 according to the present embodiment, the method is not limited as long as substantially the entire angle of view of the predetermined imaging unit being shielded can be recognized. As a specific example, whether or not substantially the entire angle of view of the predetermined imaging unit is shielded can be determined on the basis of the brightness of an image captured by the imaging unit. With such a configuration, according to the input interface of the present embodiment, recognition of the user input does not require relatively high-load processing such as image recognition for implementing gesture input. Therefore, the power consumption can be suppressed. Therefore, the input interface according to the present embodiment has high affinity with the so-called head-mounted device (in particular, a portable device) like the input/output device 20 described with reference to Fig. 2, for example.

Note that, in the above description, the input interface according to the present embodiment has been described focusing on the case of being applied to the head-mounted device as illustrated in Fig. 2. However, the description does not necessarily limit the application target of the input interface. In other words, the input interface according to the present embodiment can be applied to any device provided with an imaging unit, and may be applied to an information processing apparatus such as a so-called smart phone or tablet terminal, for example.

The favorable embodiments of the present disclosure have been described in detail with reference to the accompanying drawings, but the present technology is not limited to such examples. It is obvious that persons having ordinary knowledge in the technical field of the present disclosure can conceive various changes and alterations.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects scope of the invention is defined by the appended claims.

### REFERENCE SIGNS LIST

- 1: Information processing system
- 10: Information processing apparatus
- 101: Determination unit
- 103: Recognition unit
- 105: Processing execution unit
- 107: Output control unit
- 190: Storage unit
- 20: Input/output device
- 201a, 201b: Imaging unit
- 203a, 203b: Imaging unit
- 207: Operation unit
- 210: Output unit
- 211: Display unit
- 213: Audio output unit
- 221: Input unit
- 291: Holding unit
- 293a, 293b: Lens

## Claims

1. An information processing apparatus comprising:
a determination unit (101) configured to determine whether or not an imaging unit (201) is in a predetermined shielding state; and
a recognition unit (103) configured to recognize an operation input of a user according to the predetermined shielding state, and wherein:
the imaging unit (201) includes a first imaging unit (201a) and a second imaging unit (201b),
the predetermined shielding state includes a shielding state of the first imaging unit (201a) and a shielding state of the second imaging unit (201b),
the determination unit (101) performs first determination regarding the shielding state of the first imaging unit (201a) and second determination regarding the shielding state of the second imaging unit (201b), and
the recognition unit (103) recognizes the operation input according to a combination of the first determination and the second determination.

2. The information processing apparatus according to claim 1, wherein the recognition unit (103) controls
whether or not to recognize the operation input according to a change rate of an image acquired by the imaging unit (201), or
whether or not to recognize the operation input according to a duration time of the predetermined shielding state, or
whether or not to recognize the operation input according to a measurement result of a distance between the imaging unit (201) and an object that shields the imaging unit (201).

3. The information processing apparatus according to claim 1, wherein, in a case where a detection result of brightness of an external environment is equal to or smaller than a threshold value, the recognition unit (103) restricts processing according to recognition of the operation input.

4. The information processing apparatus according to claim 1, wherein the recognition unit (103) recognizes the operation input according to determination that one of the first imaging unit (201a) and the second imaging unit (201b) is in the shielding state.

5. The information processing apparatus according to claim 4, wherein, in a case where the first imaging unit (201a) is determined to be in the shielding state, the recognition unit (103) recognizes an operation input different from an operation input recognized in a case where the second imaging (201b) unit is determined (S101) to be in the shielding state.

6. The information processing apparatus according to claim 4, wherein, in a case where one of the first imaging unit (201a) and the second imaging unit (201b) is determined to be in the shielding state, the recognition unit (103) recognizes an operation input different from an operation input recognized in a case where both the first imaging unit (201a) and the second imaging unit (201b) are determined to be in the shielding state.

7. The information processing apparatus according to claim 1, wherein the recognition unit (103) recognizes the operation input according to timing when the first imaging unit (201a) enters the shielding state and timing when the second imaging unit (201b) enters the shielding state.

8. The information processing apparatus according to claim 1, wherein
the predetermined shielding state includes a first shielding state, and a second shielding state having a smaller shielding amount of an angle of view of the imaging unit than the first shielding state, and
in a case where the imaging unit (201) is determined to be in the first shielding state, the recognition unit (103) recognizes an operation input different from an operation input recognized in a case where the imaging unit (201) is determined to be in the second shielding state.

9. The information processing apparatus according to claim 1, further comprising an output control unit (107) configured to perform control such that information regarding the operation input is presented via an output unit (210).

10. The information processing apparatus according to claim 9, wherein the output control unit (210) performs control
such that an image captured by the imaging unit (201) is presented via the output unit (210) according to the operation input, and/or
such that an image according to a position of the imaging unit (201) is presented via the output unit (210) according to the operation input, and/or
such that a predetermined audio according to a position of the imaging unit (201) is output via the output unit (210) according to the operation input, and/or
such that notification information prompting an operation of shielding the imaging unit (201) is presented via the output unit (210) according to the operation input.

11. The information processing apparatus according to claim 9, wherein the recognition unit (103) recognizes the operation input on a basis of information regarding the operation input presented via the output unit (210).

12. The information processing apparatus according to claim 1, wherein the imaging unit (201) is configured to provide an image to a wearable device held on a head of a user.

13. An information processing method for causing a computer to perform:
determining (S101) whether or not an imaging unit, including a first imaging unit and a second imaging unit, is in a predetermined shielding state, the predetermined shielding state including a shielding state of the first imaging unit and a shielding state of the second imaging unit, and
performing (S101) first determination regarding the shielding state of the first imaging unit and second determination regarding the shielding state of the second imaging unit, and
recognizing (S105) the operation input according to a combination of the first determination and the second determination

14. A recording medium storing a program for causing a computer to execute:
determining (S101) whether or not an imaging unit including a first imaging unit and a second imaging unit is in a predetermined shielding state, the predetermined shielding state including a shielding state of the first imaging unit and a shielding state of the second imaging unit,
performing (S101) first determination regarding the shielding state of the first imaging unit and second determination regarding the shielding state of the second imaging unit, and
recognizing (S105) the operation input according to a combination of the first determination and the second determination

## Patentansprüche

1. Informationsverarbeitungsvorrichtung, umfassend:
eine Bestimmungseinheit (101), die dazu ausgelegt ist, zu bestimmen, ob sich eine Abbildungseinheit (201) in einem vorbestimmten Abschirmzustand befindet oder nicht; und
eine Erkennungseinheit (103), die dazu ausgelegt ist, eine Bedienungseingabe eines Benutzers gemäß dem vorbestimmten Abschirmzustand zu erkennen, und wobei:
die Abbildungseinheit (201) eine erste Abbildungseinheit (201a) und eine zweite Abbildungseinheit (201b) enthält, der vorbestimmte Abschirmzustand einen Abschirmzustand der ersten Abbildungseinheit (201a) und einen Abschirmzustand der zweiten Abbildungseinheit (201b) enthält,
die Bestimmungseinheit (101) eine erste Bestimmung bezüglich des Abschirmzustands der ersten Abbildungseinheit (201a) und eine zweite Bestimmung bezüglich des Abschirmzustands der zweiten Abbildungseinheit (201b) durchführt, und
die Erkennungseinheit (103) die Bedienungseingabe gemäß einer Kombination aus der ersten Bestimmung und der zweiten Bestimmung erkennt.

2. Informationsverarbeitungsvorrichtung gemäß Anspruch 1, wobei die Erkennungseinheit (103) steuert,
ob die Bedienungseingabe gemäß einer Änderungsrate eines durch die Abbildungseinheit (201) erfassten Bildes erkannt werden soll oder nicht, oder
ob die Bedienungseingabe gemäß einer Dauer des vorbestimmten Abschirmzustands erkannt werden soll oder nicht, oder
ob die Bedienungseingabe gemäß einem Messergebnis eines Abstands zwischen der Abbildungseinheit (201) und einem Objekt, das die Abbildungseinheit (201) abschirmt, erkannt werden soll oder nicht.

3. Informationsverarbeitungsvorrichtung gemäß Anspruch 1, wobei die Erkennungseinheit (103) in einem Fall, in dem ein Erkennungsergebnis der Helligkeit einer äußeren Umgebung gleich oder kleiner als ein Schwellenwert ist, die Verarbeitung gemäß der Erkennung der Bedienungseingabe einschränkt.

4. Informationsverarbeitungsvorrichtung gemäß Anspruch 1, wobei die Erkennungseinheit (103) die Bedienungseingabe gemäß der Bestimmung erkennt, dass sich entweder die erste Abbildungseinheit (201a) oder die zweite Abbildungseinheit (201b) im Abschirmzustand befindet.

5. Informationsverarbeitungsvorrichtung gemäß Anspruch 4, wobei die Erkennungseinheit (103) in einem Fall, in dem bestimmt wird, dass sich die erste Abbildungseinheit (201a) im Abschirmzustand befindet, eine Bedienungseingabe erkennt, die sich von einer Bedienungseingabe unterscheidet, die in einem Fall erkannt wird, in dem bestimmt wird (S101), dass sich die zweite Abbildungseinheit (201b) im Abschirmzustand befindet.

6. Informationsverarbeitungsvorrichtung gemäß Anspruch 4, wobei in einem Fall, in dem entweder die erste Abbildungseinheit (201a) oder die zweite Abbildungseinheit (201b) als im Abschirmzustand befindlich bestimmt wird, die Erkennungseinheit (103) eine Bedienungseingabe erkennt, die sich von einer Bedienungseingabe unterscheidet, die in einem Fall erkannt wird, in dem sowohl die erste Abbildungseinheit (201a) als auch die zweite Abbildungseinheit (201b) als im Abschirmzustand befindlich bestimmt werden.

7. Informationsverarbeitungsvorrichtung gemäß Anspruch 1, wobei die Erkennungseinheit (103) die Bedienungseingabe gemäß dem Zeitpunkt, zu dem die erste Abbildungseinheit (201a) in den Abschirmzustand eintritt, und dem Zeitpunkt, zu dem die zweite Abbildungseinheit (201b) in den Abschirmzustand eintritt, erkennt.

8. Informationsverarbeitungsvorrichtung gemäß Anspruch 1, wobei
der vorbestimmte Abschirmzustand einen ersten Abschirmzustand und einen zweiten Abschirmzustand mit einem kleineren Abschirmbetrag eines Blickwinkels der Abbildungseinheit als der erste Abschirmzustand enthält, und
die Erkennungseinheit (103) in einem Fall, in dem bestimmt wird, dass sich die Abbildungseinheit (201) im ersten Abschirmzustand befindet, eine Bedienungseingabe erkennt, die sich von einer Bedienungseingabe unterscheidet, die in einem Fall erkannt wird, in dem bestimmt wird, dass sich die Abbildungseinheit (201) im zweiten Abschirmzustand befindet.

9. Informationsverarbeitungsvorrichtung gemäß Anspruch 1, ferner umfassend eine Ausgabesteuerungseinheit (107), die dazu ausgelegt ist, eine Steuerung durchzuführen, sodass Informationen bezüglich der Bedienungseingabe über eine Ausgabeeinheit (210) dargestellt werden.

10. Informationsverarbeitungsvorrichtung gemäß Anspruch 9, wobei die Ausgabesteuerungseinheit (210) eine Steuerung durchführt, sodass ein durch die Abbildungseinheit (201) erfasstes Bild über die Ausgabeeinheit (210) gemäß der Bedienungseingabe dargestellt wird, und/oder
sodass ein Bild gemäß einer Position der Abbildungseinheit (201) über die Ausgabeeinheit (210) gemäß der Bedienungseingabe dargestellt wird, und/oder sodass ein vorbestimmter Ton entsprechend einer Position der Abbildungseinheit (201) über die Ausgabeeinheit (210) gemäß der Bedienungseingabe ausgegeben wird, und/oder sodass eine Benachrichtigungsinformation, die zu einer Operation der Abschirmung der Abbildungseinheit (201) auffordert, über die Ausgabeeinheit (210) gemäß der Bedienungseingabe dargestellt wird.

11. Informationsverarbeitungsvorrichtung gemäß Anspruch 9, wobei die Erkennungseinheit (103) die Bedienungseingabe basierend auf Informationen bezüglich der über die Ausgabeeinheit (210) dargestellten Bedienungseingabe erkennt.

12. Informationsverarbeitungsvorrichtung gemäß Anspruch 1, wobei die Abbildungseinheit (201) dazu ausgelegt ist, ein Bild an eine tragbare Vorrichtung zu liefern, die am Kopf eines Benutzers gehalten wird.

13. Informationsverarbeitungsverfahren zum Veranlassen eines Computers, Folgendes durchzuführen:
Bestimmen (S101), ob sich eine Abbildungseinheit, die eine erste Abbildungseinheit und eine zweite Abbildungseinheit enthält, in einem vorbestimmten Abschirmzustand befindet oder nicht, wobei der vorbestimmte Abschirmzustand einen Abschirmzustand der ersten Abbildungseinheit und einen Abschirmzustand der zweiten Abbildungseinheit enthält, und
Durchführen (S101) einer ersten Bestimmung bezüglich des Abschirmzustands der ersten Abbildungseinheit und einer zweiten Bestimmung bezüglich des Abschirmzustands der zweiten Abbildungseinheit, und
Erkennen (S105) der Bedienungseingabe gemäß einer Kombination aus der ersten Bestimmung und der zweiten Bestimmung.

14. Aufzeichnungsmedium, das ein Programm speichert, um einen Computer zu veranlassen, Folgendes auszuführen:
Bestimmen (S101), ob sich eine Abbildungseinheit, die eine erste Abbildungseinheit und eine zweite Abbildungseinheit enthält, in einem vorbestimmten Abschirmzustand befindet oder nicht, wobei der vorbestimmte Abschirmzustand einen Abschirmzustand der ersten Abbildungseinheit und einen Abschirmzustand der zweiten Abbildungseinheit enthält,
Durchführen (S101) einer ersten Bestimmung bezüglich des Abschirmzustands der ersten Abbildungseinheit und einer zweiten Bestimmung bezüglich des Abschirmzustands der zweiten Abbildungseinheit, und
Erkennen (S105) der Bedienungseingabe gemäß einer Kombination aus der ersten Bestimmung und der zweiten Bestimmung.

## Revendications

1. Appareil de traitement d'informations, comprenant :
une unité de détermination (101), configurée pour déterminer si une unité d'imagerie (201) est ou non dans un état d'ombrage prédéterminé ; et
une unité de reconnaissance (103), configurée pour reconnaître une entrée d'opération d'un utilisateur selon l'état d'ombrage prédéterminé, et dans lequel :
l'unité d'imagerie (201) inclut une première unité d'imagerie (201a) et une seconde unité d'imagerie (201b),
l'état d'ombrage prédéterminé inclut un état d'ombrage de la première unité d'imagerie (201a) et un état d'ombrage de la seconde unité d'imagerie (201b),
l'unité de détermination (101) réaliser une première détermination concernant l'état d'ombrage de la première unité d'imagerie (201a) et une seconde détermination concernant l'état d'ombrage de la seconde unité d'imagerie (201b), et
l'unité de reconnaissance (103) reconnaît l'entrée d'opération selon une combinaison de la première détermination et de la seconde détermination.

2. Appareil de traitement d'informations selon la revendication 1, dans lequel l'unité de reconnaissance (103) contrôle :
s'il faut reconnaître ou non l'entrée d'opération selon une fréquence de variation d'une image acquise par l'unité d'imagerie (201), ou
s'il faut reconnaître ou non l'entrée d'opération selon une durée de l'état d'ombrage prédéterminé, ou
s'il faut reconnaître ou non l'entrée d'opération selon un résultat de mesure d'une distance entre l'unité d'imagerie (201) et un objet qui ombrage l'unité d'imagerie (201).

3. Appareil de traitement d'informations selon la revendication 1, dans lequel, si un résultat de détection de luminosité d'un environnement externe est inférieur ou égal à une valeur seuil, l'unité de reconnaissance (103) restreint le traitement selon une reconnaissance de l'entrée d'opération.

4. Appareil de traitement d'informations selon la revendication 1, dans lequel l'unité de reconnaissance (103) reconnaît l'entrée d'opération selon une détermination du fait que la première unité d'imagerie (201a) ou que la seconde unité d'imagerie (201b) est dans l'état d'ombrage.

5. Appareil de traitement d'informations selon la revendication 4, dans lequel, s'il est déterminé que la première unité d'imagerie (201a) est dans l'état d'ombrage, l'unité de reconnaissance (103) reconnaît une entrée d'opération différemment d'une entrée d'opération reconnue s'il est déterminé (S101) que la seconde unité d'imagerie (201b) est dans l'état d'ombrage.

6. Appareil de traitement d'informations selon la revendication 4, dans lequel, s'il est déterminé que la première unité d'imagerie (201a) ou que la seconde unité d'imagerie (201b) est dans l'état d'ombrage, l'unité de reconnaissance (103) reconnaît une entrée d'opération différemment d'une entrée d'opération reconnue s'il est déterminé que la première unité d'imagerie (201a) et la seconde unité d'imagerie (201b) sont l'une et l'autre dans l'état d'ombrage.

7. Appareil de traitement d'informations selon la revendication 1, dans lequel l'unité de reconnaissance (103) reconnaît l'entrée d'opération selon un temps où la première unité d'imagerie (201a) entre dans l'état d'ombrage et un temps où la seconde unité d'imagerie (201b) entre dans l'état d'ombrage.

8. Appareil de traitement d'informations selon la revendication 1, dans lequel :
l'état d'ombrage prédéterminé inclut un premier état d'ombrage et un second état d'ombrage dont la quantité d'ombrage d'un angle de vue de l'unité d'imagerie est inférieure à celle du premier état d'ombrage, et
s'il est déterminé que l'unité d'imagerie (201) est dans le premier état d'ombrage, l'unité de reconnaissance (103) reconnaît une entrée d'opération différemment d'une entrée d'opération reconnue s'il est déterminé que l'unité d'imagerie (201) est dans le second état d'ombrage.

9. Appareil de traitement d'informations selon la revendication 1, comprenant en outre une unité de contrôle de sortie (107) configurée pour réaliser un contrôle de manière qu'une information concernant l'entrée d'opération soit présentée par l'intermédiaire d'une unité de sortie (210).

10. Appareil de traitement d'informations selon la revendication 9, dans lequel l'unité de contrôle de sortie (210) réalise un contrôle :
de manière qu'une image capturée par l'unité d'imagerie (201) soit présentée par l'intermédiaire de l'unité de sortie (210) selon l'entrée d'opération, et/ou de manière qu'une image selon une position de l'unité d'imagerie (201) soit présentée par l'intermédiaire de l'unité de sortie (210) selon l'entrée d'opération, et/ou de manière qu'un audio prédéterminé selon une position de l'unité d'imagerie (201) soit produit par l'intermédiaire de l'unité de sortie (210) selon l'entrée d'opération, et/ou
de manière qu'une information de notification demandant une opération d'ombrage de l'unité d'imagerie (201) soit présentée par l'intermédiaire de l'unité de sortie (210) selon l'entrée d'opération.

11. Appareil de traitement d'informations selon la revendication 9, dans lequel l'unité de reconnaissance (103) reconnaît l'entrée d'opération sur la base d'une information concernant l'entrée d'opération présentée par l'intermédiaire de l'unité de sortie (210).

12. Appareil de traitement d'informations selon la revendication 1, dans lequel l'unité d'imagerie (201) est configurée pour fournir une image à un dispositif mettable porté sur la tête d'un utilisateur.

13. Procédé de traitement d'informations pour amener un ordinateur à réaliser les étapes consistant à :
déterminer (S101) si une unité d'imagerie, qui inclut une première unité d'imagerie et une seconde unité d'imagerie,
est ou non dans un état d'ombrage prédéterminé, l'état d'ombrage prédéterminé incluant un état d'ombrage de la première unité d'imagerie et un état d'ombrage de la seconde unité d'imagerie, et
réaliser (S101) une première détermination concernant l'état d'ombrage de la première unité d'imagerie et une seconde détermination concernant l'état d'ombrage de la seconde unité d'imagerie, et
reconnaître (S105) l'entrée d'opération selon une combinaison de la première détermination et de la seconde détermination.

14. Support d'enregistrement stockant un programme pour amener un ordinateur à exécuter les opérations consistant à :
déterminer (S101) si une unité d'imagerie, qui inclut une première unité d'imagerie et une seconde unité d'imagerie est ou non dans un état d'ombrage prédéterminé, l'état d'ombrage prédéterminé incluant un état d'ombrage de la première unité d'imagerie et un état d'ombrage de la seconde unité d'imagerie,
réaliser (S101) une première détermination concernant l'état d'ombrage de la première unité d'imagerie et une seconde détermination concernant l'état d'ombrage de la seconde unité d'imagerie, et
reconnaître (S105) l'entrée d'opération selon une combinaison de la première détermination et de la seconde détermination.
